(19) Europäisches Patentamt
European Patent Office
Office européen des brevets

(11) EP 3 476 870 B1

(12) **EUROPEAN PATENT SPECIFICATION**

(45) Date of publication and mention of the grant of the patent:
**28.01.2026 Bulletin 2026/05**

(21) Application number: **17890923.0**

(22) Date of filing: **06.12.2017**

(51) International Patent Classification (IPC):
***C08F 210/16*** *(2006.01)* ***C08F 4/6592*** *(2006.01)*
***C08F 4/659*** *(2006.01)*

(52) Cooperative Patent Classification (CPC):
(C-Sets available)
**C08F 210/16;** C08F 4/65908; C08F 4/65912;
C08F 4/65916; C08F 2420/07; C08F 2420/10
(Cont.)

(86) International application number:
**PCT/KR2017/014195**

(87) International publication number:
**WO 2018/131793 (19.07.2018 Gazette 2018/29)**

(54) **METHOD FOR PREPARING AN OLEFIN POLYMER**

VERFAHREN ZUR HERSTELLUNG EINES OLEFINPOLYMERS

PROCÉDÉ DE PRÉPARATION D'UN COPOLYMÈRE D'OLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2017 KR 20170005293**

(43) Date of publication of application:
**01.05.2019 Bulletin 2019/18**

(73) Proprietor: **LG Chem, Ltd.**
**Seoul 07336 (KR)**

(72) Inventors:
- **KIM, Joong Soo**
  **Daejeon 34122 (KR)**
- **SONG, Eun Kyoung**
  **Daejeon 34122 (KR)**
- **SONG, Nak-Kyu**
  **Daejeon 34122 (KR)**
- **HONG, Dae Sik**
  **Daejeon 34122 (KR)**
- **KIM, Si Yong**
  **Daejeon 34122 (KR)**
- **SHIN, Eun Young**
  **Daejeon 34122 (KR)**
- **YOU, Young Suk**
  **Daejeon 34122 (KR)**
- **HONG, Yoon Ki**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 348 585**
**JP-A- 2004 307 665**
**KR-A- 20150 057 974**
**KR-A- 20160 121 045**
**KR-A- 20160 147 642**
**US-A1- 2008 312 380**
**US-A1- 2010 133 714**
**US-A1- 2013 075 409**
**US-B1- 6 214 949**

- **GANVIR V ET AL: "Extrudate swell of linear and branched polyethylenes: ALE simulations and comparison with experiments", JOURNAL OF NON-NEWTONIAN FLUID MECHANICS, ELSEVIER, NL, vol. 166, no. 1-2, 1 January 2011 (2011-01-01), pages 12 - 24, XP027561331, ISSN: 0377-0257, [retrieved on 20101012]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 4/65904;**
**C08F 210/16, C08F 4/65925;**
**C08F 210/16, C08F 4/65927;**
C08F 210/16, C08F 210/08, C08F 2500/04, C08F 2500/12;
C08F 210/16, C08F 210/08, C08F 2500/12;
C08F 210/16, C08F 210/14, C08F 2500/04, C08F 2500/12;
C08F 210/16, C08F 210/14, C08F 2500/12

## Description

### [Technical Field]

CROSS-REFERENCE TO RELATED APPLICATION(S)

This application claims priority to and the benefit of Korean Patent Application No. 10-2017-0005293 filed on January 12, 2017 with the Korean Intellectual Property Office.

The present invention relates to an olefin polymer having excellent processability and dimensional stability, and a method for preparing the same.

### [Background Art]

Polyolefin resins used for large-diameter high-pressure pipe tubes generally require high pressure resistance characteristic and excellent processability. The high pressure resistance characteristic is generally a physical property that can be expressed in a high density region, and this is because the higher the degree of crystallization in the polyolefin resin, the modulus is increased and the strength to withstand high pressure increases.

However, conventional pipes has to assure a long-term pressure resistance stability for at least 50 years, but there is a disadvantage that, if the density is high, the resistance against the brittle fracture mode is lowered and the long-term pressure resistance characteristic is deteriorated.

In addition, if the molecular weight of a polyolefin resin is low or the polydispersity index is small, a sagging phenomenon occurs during processing of a large diameter pipe and it is difficult to process the pipe. The polyolefin resin having a high molecular weight and a very broad polydispersity index should be applied to solve these problems. Especially, if the molecular weight is high, extrusion load is increased and pipe appearance is poor, and thus a very wide polydispersity index is necessarily required.

Although attempts have been conducted to improve these problems, there is a problem that the physical properties and processability of the product are not satisfied at the same time. Therefore, manufacture of a superior product having a balance between long-term stability and processability is constantly required.

On the other hand, the processability of the polyolefin resin can be evaluated by a die swell ratio. The die swell ratio requires expensive analytical instruments for measurement, and the measurement error is relatively large, which is a hurdle to the development of a new resin for high-pressure pipes.

US 2008/0312380 A1 describes an ethylene-1-hexene copolymer prepared in the presence of (n-propylcyclopentadienyl) (tetramethylcyclopentadienyl) zirconium dichloride and $[(2,3,4,5,6\text{-}Me_3C_6)NCH_2CH_2]_2NHZrBz_2$ (Ex. 1), and US 2010/0133714 A1 describes a polyethylene prepared in the presence of bis (n-butylcyclopentadienyl) zirconium dichloride and $[(2, 3, 4, 5, 6\text{-}Me_5C_6)NCH_2CH_2]_2NHZrBz_2$ (Ex. 3). KR20160121045A describes related catalyst systems for polymerizing olefins.

### [DETAILED DESCRIPTION OF THE INVENTION]

### [Technical Problem]

It is an object of the present invention to provide a method for preparing an olefin polymer which has excellent processability and dimensional stability and thus is useful for hollow molding of pipes or the like.

### [Technical Solution]

According to one embodiment of the present invention, there is provided a method for preparing an olefin polymer having a 2L Bloma swell value of 1.2 to 2.2 which is determined according to the following Equation 1:

[Equation 1]

$$\text{2L Bloma swell} = (\text{Capillary swell}) \times c1 + (M_{z+1}) \times c2 + c3$$

in the above equation 1, c1=1.27, c2=2.40E$^{-7}$, and c3=-0.940,
the method comprising a step of polymerizing an olefin monomer in the presence of a catalyst composition comprising one or more types of first metallocene compounds represented by the following Chemical Formula 1, one or more types of second metallocene compounds represented by the following Chemical Formula 3; and one or more types of

third metallocene compounds represented by the following Chemical Formula 4:

[Chemical Formula 1]

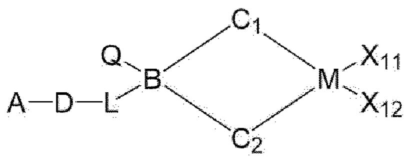

in the above formula 1,

A is hydrogen, halogen, $C_{1-20}$ alkyl, $C_{2-20}$ alkenyl, $C_{3-20}$ cycloalkyl, $C_{6-20}$ aryl, $C_{7-20}$ alkylaryl, $C_{7-20}$ arylalkyl, $C_{1-20}$ alkoxy, $C_{2-20}$ alkoxyalkyl, $C_{3-20}$ heterocycloalkyl, or $C_{5-20}$ heteroaryl;

D is -O-, -S-, -N(R)- or -Si(R) (R')-, where R and R' are the same as or different from each other and each independently represent hydrogen, halogen, $C_{1-20}$ alkyl, $C_{2-20}$ alkenyl, $C_{3-20}$ cycloalkyl, or $C_{6-20}$ aryl,

L is $C_{1-10}$ linear or branched alkylene;

B is carbon, silicon or germanium;

Q is hydrogen, halogen, $C_{1-20}$ alkyl, $C_{3-20}$ cycloalkyl, $C_{2-20}$ alkenyl, $C_{6-20}$ aryl, $C_{7-20}$ alkylaryl, or $C_{7-20}$ arylalkyl;

M is a Group 4 transition metal;

$X_{11}$ and $X_{12}$ are the same as or different from each other and each independently represent halogen, $C_{1-20}$ alkyl, $C_{2-20}$ alkenyl, $C_{3-20}$ cycloalkyl, $C_{6-20}$ aryl, nitro, amido, $C_{1-20}$ alkylaryl, $C_{2-20}$ alkoxy, or $C_{1-20}$ sufonate;

$C_1$ and $C_2$ are the same as or different from each other and are each independently represented by any one of the following Chemical Formulas 2a, 2b and 2c, provided that the case where both $C_1$ and $C_2$ are Chemical Formula 2c is excluded:

[Chemical Formula 2a]

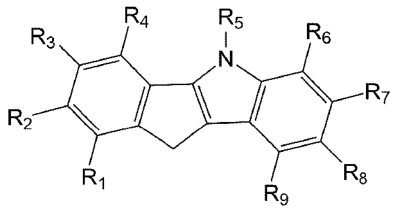

[Chemical Formula 2b]

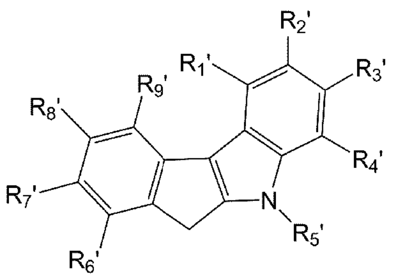

[Chemical Formula 2c]

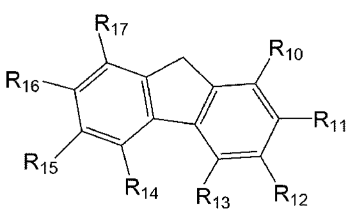

in the above formulas 2a, 2b and 2c, $R_1$ to $R_{17}$ and $R_1$' to $R_9$' are the same as or different from each other and each independently represent hydrogen, halogen, $C_{1-20}$ alkyl, $C_{2-20}$ alkenyl, $C_{3-20}$ cycloalkyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-20}$ alkylaryl, or $C_{7-20}$ arylalkyl, and adjacent two or more substituents of $R_{10}$ to $R_{17}$ may be connected with each other to form a substituted or unsubstituted aliphatic or aromatic ring;

[Chemical Formula 3]

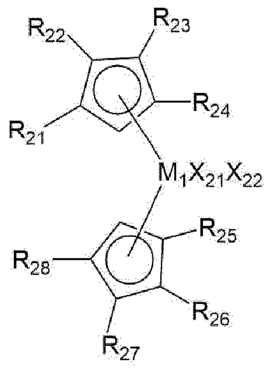

in the above formula 3

$M_1$; is a Group 4 transition metal;

at least one of $R_{21}$ to $R_{28}$ is $-(CH_2)_n-OR_a$ (where $R_a$ is $C_{1-6}$ linear or branched alkyl group, and n is an integer of 2 to 10), and the others are the same as or different from each other and each independently represent hydrogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl, or adjacent two or more substituents thereof may be connected with each other to form a substituted or unsubstituted aliphatic or aromatic ring;

$X_{21}$ and $X_{22}$ are the same as or different from each other and each independently represent halogen, $C_{1-20}$ alkyl, $C_{2-10}$ alkenyl, $C_{3-20}$ cycloalkyl, $C_{7-40}$ alkylaryl, $C_{7-40}$ arylalkyl, $C_{6-20}$ aryl, $C_{1-20}$ alkylidene, amino, $C_{2-20}$ alkylalkoxy, or $C_{7-40}$ arylalkoxy;

[Chemical Formula 4]

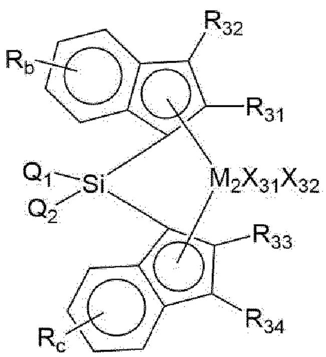

in the above formula 4

$M_2$ is a Group 4 transition metal;

at least one of $R_{31}$ to $R_{34}$ is $-(CH_2)_n-OR_a$ (where $R_a$ is $C_{1-6}$ linear or branched alkyl group, and n is an integer of 2 to 10), and the others are the same as or different from each other and each independently represent hydrogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl, or adjacent two or more substituents thereof may be connected with each other to form a substituted or unsubstituted aliphatic or aromatic ring;

$R_b$ and $R_c$ are the same as or different from each other and each independently represent hydrogen, $C_{1-20}$ alkyl, $C_{3-20}$ cycloalkyl, $C_{1-10}$ alkoxy, $C_{2-20}$ alkoxyalkyl, $C_{6-20}$ aryl, $C_{6-10}$ aryloxy, $C_{2-20}$ alkenyl, $C_{7-40}$ alkylaryl, $C_{7-40}$ arylalkyl, $C_{8-40}$ arylalkenyl, or $C_{2-10}$ alkynyl;

$X_{31}$ and $X_{32}$ are the same as or different from each other and each independently represent halogen, $C_{1-20}$ alkyl, $C_{2-20}$ alkenyl, $C_{3-20}$ cycloalkyl, $C_{7-40}$ alkylaryl, $C_{7-40}$ arylalkyl, $C_{6-20}$ aryl, $C_{1-20}$ alkylidene, amino, $C_{2-20}$ alkylalkoxy, or $C_{7-40}$ arylalkoxy;

$Q_1$ and $Q_2$ are the same as or different from each other and each independently represent hydrogen, halogen, $C_{1-20}$

alkyl, $C_{2-20}$ alkenyl, $C_{3-20}$ cycloalkyl, $C_{6-20}$ aryl, $C_{7-20}$ alkylaryl, or $C_{7-20}$ arylalkyl, with the proviso that the methods for preparing an olefin polymer as described in Example 1 and Example 2 of EP 3 348 585 A1 are excluded.

In the above-mentioned preparation method, the catalyst composition may each independently contain the second metallocene compound and third metallocene compound in an amount of 50 to 200 parts by weight based on 100 parts by weight of the first metallocene compound.

Further, the catalyst composition may further include one or more cocatalysts selected among an aluminum-containing first cocatalyst of the following Chemical Formula 5 and a borate-based cocatalyst of the following Chemical Formula 6:

[Chemical Formula 5] $-[Al(R_{31})-O-]_k-$

in the above formula 5, $R_{31}$ is each independently a halogen, a halogen-substituted or unsubstituted hydrocarbyl group having 1 to 20 carbon atoms, k is an integer of 2 or more,

[Chemical Formula 6] $T^+[BG_4]^-$

in the above formula 6,
$T^+$ is a +1 valent polyatomic ion, B is boron in an oxidation state of +3, and G is each independently selected from the group consisting of a hydride, a dialkylamido, a halide, an alkoxide, an aryloxide, a hydrocarbyl, a halocarbyl and a halo-substituted hydrocarbyl, wherein the G has 20 or less carbon atoms, provided that G is halide at one or less position.

Further, in the preparation method, the catalyst composition may further include a support, and the first, second and third metallocene compounds may be supported on the support.

**[Advantageous Effects]**

The olefin polymer prepared according to the method of the present invention has excellent processability and dimensional stability and thus can be usefully applied to a high-pressure heating pipe, a mining pipe, a large diameter pipe or the like.

**[Brief Description of Drawings]**

FIG. 1 is a graph showing a relationship between 2 L bloma swell calculated value (prediction) and 2 L bloma measured value (2 L bloma) according to Equation 1.

FIG. 2 is a schematic diagram showing an extrusion die used in the measurement of the 2L bloma value in Experimental Example 1.

**[DETAILED DESCRIPTION OF THE EMBODIMENTS]**

The terminology used herein is for the purpose of describing exemplary embodiments only and is not intended to limit the present invention. Further, singular expressions "a," "an," and "the" used herein may include plural expressions unless the context clearly indicates otherwise. In addition, it should be understood that the meaning of the term "comprising", "including", "having" and the like is intended to specify the presence of stated features, steps, components or combinations thereof and does not exclude existence or addition of one or more other features, steps, components or combinations thereof.

The invention can make various modifications and take various forms, and thus specific embodiments are illustrated and described in detail below. It should be understood, however, that the invention is not intended to be limited to any particular disclosure form, but includes all modifications, equivalents and alternatives falling within the scope of the claims.

Hereinafter, a method for preparing the olefin polymer according to specific embodiments of the invention will be described.

The physical properties of the polyolefin can be evaluated in several respects. For example, the weight average molecular weight, the number average molecular weight, the polydispersity index, the melt flow rate (MFR), the melt flow rate ratio (MFRR), the density, Full Notch Creep Test (FNCT)) and the like can be measured and used comprehensively for evaluating the physical characteristics such as strength, processability and stability of a polymer. Among them, a polyolefin resin used in a pressure-resistant heating pipe, a large- diameter high-pressure pipe, or the like is required to have long-term stability and processability under high pressure conditions.
In general, viscosity, extrusion amount, presence or absence of melt fracture, pipe sizing and like are considered in order to improve pipe processability. In addition, swell, which is a feature specific to the polymer, is a main factor affecting pipe sizing in addition to stretching. If this factor is not taken into consideration, there is a risk that the dimensions may be different or processing may not be performed. In general, the dimensions are determined in the process that the resin leaving a die enters a vacuum water bath during pipe processing, but even when the initial swell is large or the swell is small, the resin does not easily enter a bath if it is not stretched.

As a method of evaluating such dimensional stability and processability, a method of measuring a die swell ratio is known. However, the method of obtaining the die swell ratio requires an expensive measuring equipment and thus causes an increase in development costs, and the measurement error is relatively large, which makes it difficult to evaluate and analyze the dimensional stability and processability of the polymer.

On the other hand, in the present invention, it has been found that the bloma swell characteristics can be controlled by predicting processablity and dimensional stability from inherent swell characteristic and stretching characteristic, and that the capillary swell and Mz+1 affecting the intrinsic swell characteristic and the stretching characteristic can be controlled by using a catalyst composition containing three types of specific metallocene compounds during the preparation of olefin polymer, thereby providing an olefin polymer exhibiting excellent processability and dimensional stability.

That is, according to one embodiment of the invention, there is provided an olefin polymer having a 2L Bloma swell value of 1.2 to 2.2 which is determined according to the following Equation 1:

$$\text{2L Bloma swell} = (\text{Capillary swell}) \times c1 + (M_{z+1}) \times c2 + c3 \qquad \text{[Equation 1]}$$

In the above equation 1, c1=1.27, c2=2.40E$^{-7}$, and c3=-0.940.

More specifically, the olefin polymer according to one embodiment of the present invention may have a 2L Bloma swell value of 1.3 to 2.15, more specifically 1.5 to 2.11, which is determined according to Equation 1.

In the present invention, the 2L Bloma swell is a value in which the dimensional stability of the olefin polymer is digitalized in consideration of the swell characteristic and the stretching characteristic affecting the dimension during processing with the olefin polymer, and the molecular structure within the polymer can be predicted from the 2L Bloma swell value. The swell characteristic is a capillary swell value specific to the polymer measured using a capillary rheometer, and the stretching characteristic is a value obtained by measuring the stretching property by a measured polymer region of Mz+1 using gel permeation chromatography (GPC). In the case of a monomodal type polymer having a narrow polydispersity index (PDI), the 2L Bloma swell value is small due to stretching, and in the case of a polymer having a broad PDI, stretching is not easily performed due to the polymer region (Mz+1). The olefin polymer according to one embodiment of the present invention can exhibit excellent processability and dimensional stability by satisfying the above-mentioned 2 L Bloma swell value.

Further, the olefin polymer according to one embodiment of the present invention may have a Z-average molecular weight (Mz+1) of 300,000 g/mol to 6,000,000 g/mol, more specifically 500,000 g/mol to 5,000,000 g/mol under the condition that the above-mentioned 2 L Bloma swell value is satisfied. The Z-average molecular weight (Mz+1) refers to the formation of a polymer region in the polymer, in particular, the formation of a polymer tail structure, and stretching properties can be exhibited by having the Z-average molecular weight (Mz+1) within the above range.

In the present invention, the Z-average molecular weight (Mz+1) is a converted value with respect to the standard polystyrene as measured using gel permeation chromatography (GPC, manufactured by Agilent) similarly to the weight average molecular weight (Mw) and number average molecular weight (Mn) . However, the above-mentioned methods for measuring the molecular weight are not limited thereto, and it can be measured by other methods known in the technical field to which the present invention belongs.

In addition, the olefin polymer may have a capillary swell value specific to the polymer of 1.3 to 2.2, more specifically 1.4 to 2.2, which is measured using a capillary rheometer. The capillary swell value means the formation of a medium or high molecular weight polymer structure at a level of a molecular weight of $10^5$ to $10^6$ g/mol in the polymer, and excellent swell characteristic can be exhibited by having a capillary swell value within the above range.

In addition, the olefin polymer according to one embodiment of the present invention can exhibit physical properties similar to those of HDPE in order to maintain excellent mechanical properties of conventional HDPE.

As an example, the olefin polymer may have a density of 0.930 g/cm$^3$ to 0.960 g/cm$^3$, more specifically 0.935 g/cm$^3$ to 0.955 g/cm$^3$ which is measured according to ASTM D1505.

Further, the olefin polymer may have a melt index of 0.01 g/10min to 2 g/10min, more specifically 0.5 g/10min to 1.5 g/10min, which is measured at a temperature of 190°C under a load of 2.16 kg according to standard ASTM D 1238.

Further, the olefin polymer may have MFRR (21.6/2.16) of 10 or more and less than 500, more specifically 15 to 400 in which a melt flow rate ($MFR_{21.6}$) measured at a temperature of 190°C under a load of 21.6 kg according to ISO 1133

is divided by a melt flow rate ($MFR_{2.16}$) measured at a temperature of 190°C under a load of 2.16 kg according to ISO 1133.

Further, the olefin polymer may have a number average molecular weight of 8,000 g/mol to 50,000 g/mol and a weight average molecular weight of 70,000 g/mol to 400,000 g/mol. More specifically, the olefin polymer may have a number average molecular weight of 10,000 g/mol to 45,000 g/mol and a weight average molecular weight of 100,000 g/mol to 350,000 g/mol. In addition, the polydispersity index (PDI), which is determined by the ratio (Mw/Mn) of the number average molecular weight (Mn) to the weight average molecular weight (Mw) of the olefin polymer may be 2.5 to 30, more specifically 2.5 to 25.

The olefin polymer may have at least any one of the physical properties described above, and may have all of the properties described above in order to exhibit excellent mechanical strength. As described above, when the content and the Mw condition of the above-mentioned branched polymer structure are satisfied, and at the same time, similarly to HDPE, the density and the melt index as well as the ranges of MFRR, Mw, Mz+1 and polydispersity index are further satisfied, the effect of improving the mechanical strength and processability can be more remarkable together with excellent dimensional stability.

The olefin polymer exhibiting such physical properties may be, for example, a copolymer of ethylene and an alpha olefin. In this case, the alpha olefin may include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, and mixtures thereof. Among them, the olefin polymer may be a copolymer of ethylene/1-octene, ethylene/1-hexene or ethylene/1-butene. When the olefin polymer according to one embodiment is the copolymer as described above, the physical properties described above can be more easily realized. However, the types of the olefin polymer according to one embodiment are not limited to the above-mentioned examples, and any type of olefin polymers known in the technical field to which the present invention belongs may be used as long as it can exhibit the above-mentioned physical properties.

In the ethylene/alpha-olefin copolymer, the content of the alpha-olefin as the comonomer is not particularly limited and may be appropriately selected depending on the use, purpose and the like of the copolymer. More specifically, it may be more than 0 mol% and 99 mol% or less.

The olefin polymer as described above is prepared by the method comprising a step of polymerizing an olefin monomer in the presence of a catalyst composition comprising one or more types of first metallocene compounds represented by the following Chemical Formula 1, one or more types of second metallocene compounds represented by the following Chemical Formula 3; and one or more types of third metallocene compounds represented by the following Chemical Formula 4:

[Chemical Formula 1]

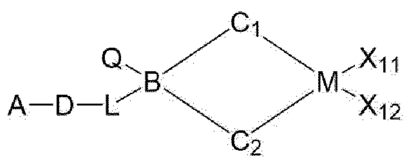

in the above formula 1,

A is hydrogen, halogen, $C_{1-20}$ alkyl, $C_{2-20}$ alkenyl, $C_{3-20}$ cycloalkyl, $C_{6-20}$ aryl, $C_{7-20}$ alkylaryl, $C_{7-20}$ arylalkyl, $C_{1-20}$ alkoxy, $C_{2-20}$ alkoxyalkyl, $C_{6-20}$ heterocycloalkyl, or $C_{5-20}$ heteroaryl;

D is -O-, -S-, -N(R)- or -Si(R)(R')-, wherein R and R' are the same as or different from each other and each independently represent hydrogen, halogen, $C_{1-20}$ alkyl, $C_{2-20}$ alkenyl, $C_{3-20}$ cycloalkyl, or $C_{6-20}$ aryl,

L is $C_{1-10}$ linear or branched alkylene;

B is carbon, silicon or germanium;

Q is hydrogen, halogen, $C_{1-20}$ alkyl, $C_{3-20}$ cycloalkyl, $C_{2-20}$ alkenyl, $C_{6-20}$ aryl, $C_{7-20}$ alkylaryl, or $C_{7-20}$ arylalkyl;

M is a Group 4 transition metal;

$X_{11}$ and $X_{12}$ are the same as or different from each other and each independently represent halogen, $C_{1-20}$ alkyl, $C_{2-20}$ alkenyl, $C_{3-20}$ cycloalkyl, $C_{6-20}$ aryl, nitro, amido, $C_{1-20}$ alkylsilyl, $C_{1-20}$ alkoxy, or $C_{1-20}$ sufonate;

$C_1$ and $C_2$ are the same as or different from each other and are each independently represented by any one of the following Chemical Formulas 2a, 2b and 2c, provided that the case where both $C_1$ and $C_2$ are Chemical Formula 2c is excluded:

[Chemical Formula 2a]

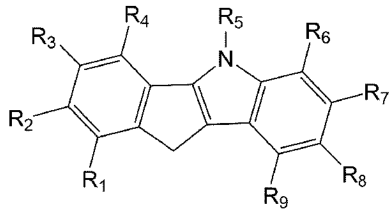

[Chemical Formula 2b]

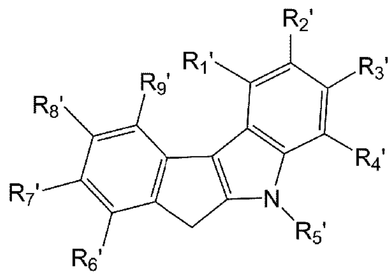

[Chemical Formula 2c]

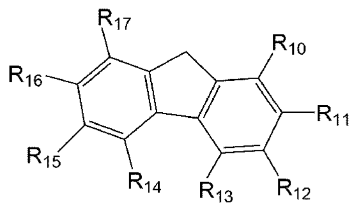

in the above formulas 2a, 2b and 2c,1,

$R_1$ to $R_{17}$ and $R_1$' to $R_9$' are the same as or different from each other and each independently represent hydrogen, halogen, $C_{1-20}$ alkyl, $C_{2-20}$ alkenyl, $C_{3-20}$ cycloalkyl, $C_{1-20}$ alkylsilyl, $C_{1-20}$ silylalkyl, $C_{1-20}$ alkoxysily, $C_{1-20}$ alkoxy, $C_{6-20}$ aryl, $C_{7-20}$ alkylaryl, or $C_{7-20}$ arylalkyl, and adjacent two or more substituents of $R_{10}$ to $R_{17}$ may be connected with each other to form a substituted or unsubstituted aliphatic or aromatic ring;

[Chemical Formula 3]

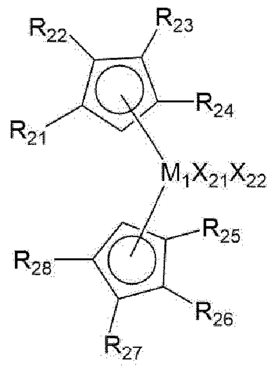

in the above formula 3

$M_1$ is a Group 4 transition metal;

at least one of $R_{21}$ to $R_{28}$ is - $(CH_2)_n$-$OR_a$ (where $R_a$ is $C_{1-20}$ linear or branched alkyl group, and n is an integer of 2 to

10), and the others are the same as or different from each other and each independently represent hydrogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl, or adjacent two or more substituents thereof may be connected with each other to form a substituted or unsubstituted aliphatic or aromatic ring;

$X_{21}$ and $X_{22}$ are the same as or different from each other and each independently represent halogen, $C_{1-20}$ alkyl, $C_{2-20}$ alkenyl, $C_{3-20}$ cycloalkyl, $C_{7-40}$ alkylaryl, $C_{7-40}$ arylalkyl, $C_{6-20}$ aryl, substitued or unsubstituted $C_{1-20}$ alkylidene, substitued or unsubstituted amino, $C_{2-20}$ alkylalkoxy, or $C_{7-40}$ arylalkoxy;

[Chemical Formula 4]

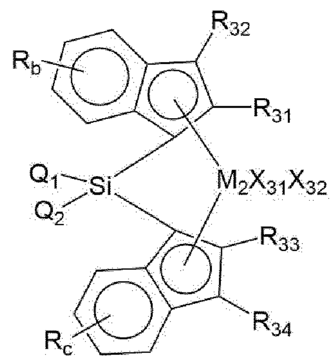

in the above formula 4

$M_2$ is a Group 4 transition metal;

at least one of $R_{31}$ to $R_{34}$ is $-(CH_2)_n-OR_a$ (where $R_a$ is $C_{1-6}$ linear or branched alkyl group, and n is an integer of 2 to 10), and the others are the same as or different from each other and each independently represent hydrogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl, or two or more substituents thereof may be connected with each adjacent other to form a substituted or unsubstituted aliphatic or aromatic ring;

$R_b$ and $R_c$ are the same as or different from each other and each independently represent hydrogen, $C_{1-20}$ alkyl, $C_{3-20}$ cycloalkyl, $C_{1-10}$ alkoxy, $C_{2-10}$ alkoxyalkyl, $C_{6-20}$ aryl, $C_{6-10}$ aryloxy, $C_{2-20}$ alkenyl, $C_{7-40}$ alkylaryl, $C_{7-40}$ arylalkyl, $C_{8-40}$ arylalkenyl, or $C_{2-10}$ alkynyl;

$X_{31}$ and $X_{32}$ are the same as or different from each other and each independently represent halogen, $C_{1-20}$ alkyl, $C_{2-20}$ alkenyl, $C_{3-20}$ cycloalkyl, $C_{7-40}$ alkylaryl, $C_{7-40}$ arylalkyl, $C_{6-20}$ aryl, substitued or unsubstituted $C_{1-20}$ alkylidene, substitued or unsubstituted amino, $C_{2-20}$ alkylalkoxy, or $C_{7-40}$ arylalkoxy;

$Q_1$ and $Q_2$ are the same as or different from each other and each independently represent hydrogen, halogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl.

The substituents of Chemical Formulas 1, 3, and 4 will be described in more detail below.

The $C_{1-20}$ alkyl includes a linear or branched alkyl, and specifically includes, but is not limited to, methyl, ethyl, propyl, isopropyl, n-butyl, tert-butyl, pentyl, hexyl, heptyl, octyl and the like.

The $C_{2-20}$ alkenyl includes a linear or branched alkenyl, and specifically includes, but is not limited to, allyl, ethenyl, propenyl, butenyl, pentenyl, and the like.

The $C_{3-20}$ cycloalkyl includes a monocyclic or fused cylic cycloalkyl, and specifically includes, but is not limited to, cyclopropyl, cyclobutyl, cyclopentyl, cyclohexyl, norbornyl and the like.

The $C_{6-20}$ aryl includes a monocyclic or fused cyclic aryl, and specifically includes, but is not limited to, phenyl, biphenyl, naphthyl, phenanthrenyl, fluorenyl, and the like.

The $C_{5-20}$ heteroaryl includes a monocyclic or fused cyclic heteroaryl, and examples thereof include, but are not limited to, carbazolyl, pyridyl, quinoline, isoquinoline, thiophenyl, furanyl, imidazole, oxazolyl, thiazolyl, triazine, tetrahydropyrananyl, tetrahydrofuranyl, and the like.

Examples of the $C_{1-20}$ alkoxy include, but are not limited to, methoxy, ethoxy, phenyloxy, cyclohexyloxy, and the like.

Examples of the Group 4 transition metal include, but are not limited to, titanium, zirconium, hafnium, and the like.

In the present specification, the phrase "adjacent two substituents are connected with each other to form a substituted or unsubstituted aliphatic or aromatic ring" means that an atom(s) of two substituents and an atom (atoms) to which the two substituents are bonded are connected with each other to form a ring.

Within the range that exhibits the same or similar effect as the desired effect, the above-mentioned substituents may be optionally substituted with a hydroxyl group; a halogen; a hydrocarbyl group; a hydrocarbyloxy group; a hydrocarbyl group or hydrocarbyloxy group containing at least one heteroatom selected among Group 14 to 16

heteroatoms; $-SiH_3$; a hydrocarbyl(oxy)silyl group; a phosphine group; a phosphide group; a sulfonate group; and a sulfone group.

In the catalyst composition usable for preparing the olefin polymer according to an embodiment of the present invention, the first metallocene compound represented by Chemical Formula 1 can contribute mainly to the production of high molecular weight copolymer having a high short chain branch (SCB) content, and the second metallocene compound represented by Chemical Formula 3 can contribute mainly to the production of a low molecular weight copolymer having a low SCB content. In addition, the third metallocene compound represented by Chemical Formula 4 may contribute to the production of a medium or low molecular weight copolymer having a moderate SCB content. Consequently, it is a high molecular weight olefinic copolymer having a high SCB content and at the same time has a broad molecular weight distribution, so that an olefin polymer having excellent physical properties as well as excellent processability can be produced.

More specifically, the first metallocene compound of Chemical Formula 1 forms a structure in which an indenoindole derivative and a fluorene derivative are cross-linked by a bridge, and has an unshared electron pair capable of acting as a Lewis base in the structure of the ligand. Thus, as the first metallocene compound incorporates electron-rich indenoindole group and/or fluorene group, the activity is high, and hydrogen reactivity is low due to appropriate steric hindrance and electronic effect of the ligand, thereby being able to producing high molecular weight olefin polymer. In particular. beta-hydrogen of a polymer chain in which an nitrogen atom of an indenoindole derivative grows is stabilized by hydrogen bonding to suppress beta-hydrogen elimination, thereby exhibiting low hydrogen reactivity. Therefore, in order to produce an olefin polymer having a high molecular weight and a wide polydispersity index at the same time, even when a polymerization reaction including a hydrogen proceeds or when supported on a support having a Lewis acid characteristic, it exhibits a low hydrogen reactivity, thereby being able to produce an ultra-high molecular weight olefin polymer having high catalytic activity, specifically, an ethylene/1-octene, an ethylene/1-hexene or an ethylene/1-butene copolymer.

In addition, even when the metallocene compound of Chemical Formula 1 is used in combination with a catalyst having other characteristics, an olefin polymer satisfying the characteristics of high molecular weight without lowering the activity can be produced. Therefore, an olefin polymer having a broad polydispersity index can be easily produced while containing high molecular weight olefin polymer.

Specifically, it is preferable that in Chemical Formula 1, A is hydrogen, methyl, ethyl, propyl, isopropyl, n-butyl, tert-butyl, methoxymethyl, tert-butoxymethyl, 1-ethoxyethyl, 1-methyl-methoxyethyl, tetrahydropyranyl, or tetrahydrofuranyl, but it is not limited thereto.

Further, it is more preferable that in Chemical Formula 1, L is $C_{4-8}$ linear or branched alkylene, but it is not limited thereto. Further, the alkylene group may be substituted or unsubstituted with $C_{1-20}$ alkyl, $C_{2-20}$ alkenyl, $C_{3-20}$ cycloalkyl, or $C_{6-20}$ aryl.

Further, in Chemical Formula 1, B is preferably silicon, but is not limited thereto.

In Chemical Formulas 2a, 2b and 2c, $R_1$ to $R_{17}$ and $R_1$' to $R_9$' are each independently hydrogen, methyl, ethyl, propyl, isopropyl, n-butyl, tert-butyl, pentyl, hexyl, heptyl, octyl, phenyl, halogen, trimethylsilyl, triethylsilyl, tripropylsilyl, tributylsilyl, trisiopropylsilyl, trimethylsilylmethyl, methoxy, or ethoxy, but is not limited thereto.

Specific examples of the compound represented by Chemical Formula 2a include compounds represented by one of the following structural formulas, but the present invention is not limited thereto.

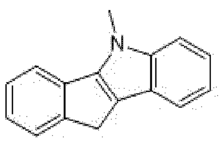
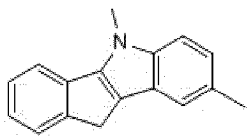
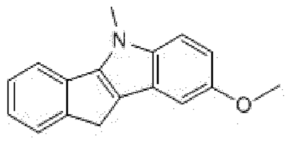

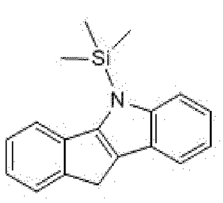
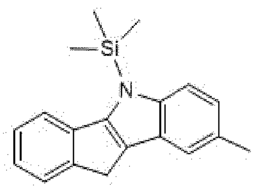
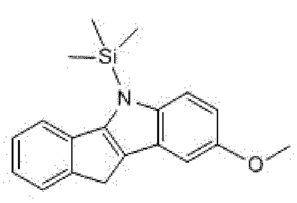

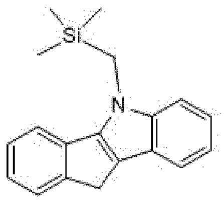
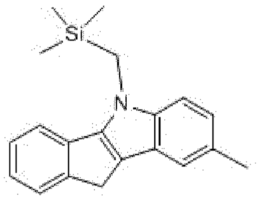
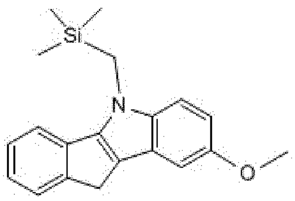

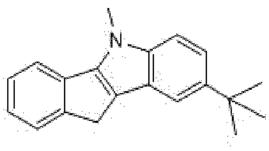
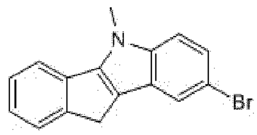
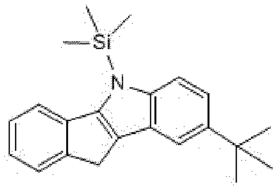

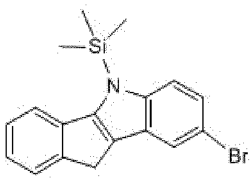
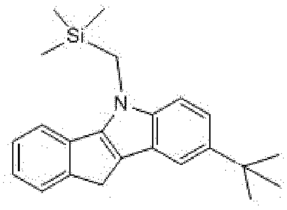
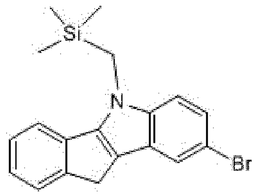

Further, specific examples of the compound represented by Chemical Formula 2b include compounds represented by one of the following structural formulas, but the present invention is not limited thereto.

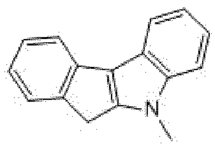
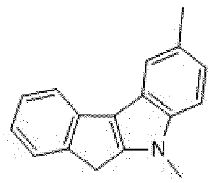
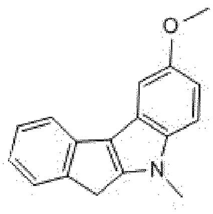

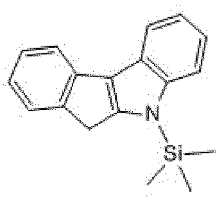
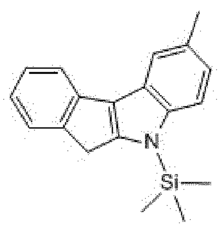
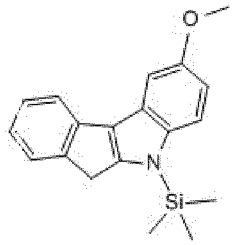

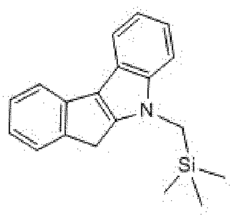
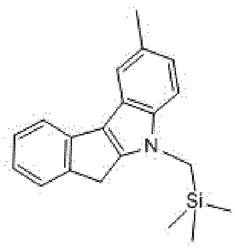
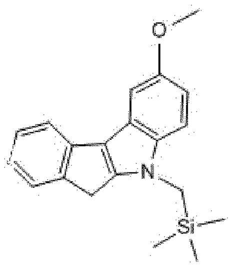

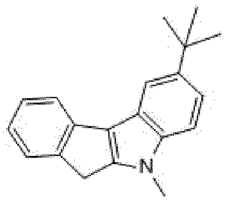
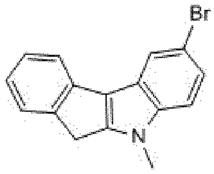
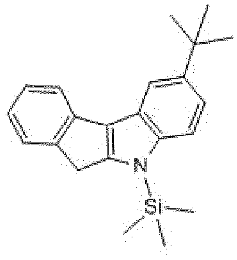

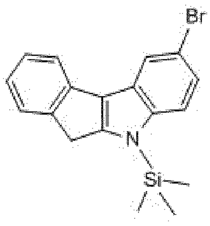
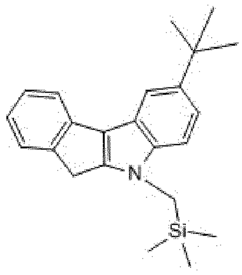
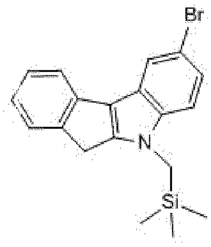

Further, specific examples of the compound represented by Chemical Formula 2c include compounds represented by one of the following structural formulas, but the present invention is not limited thereto.

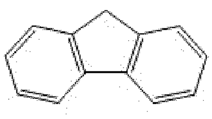
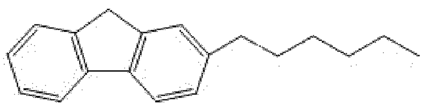

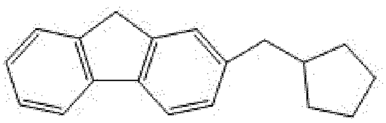
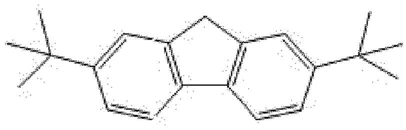

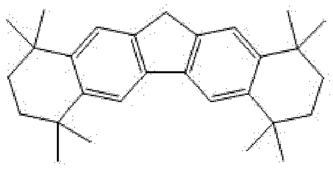

Specific examples of the compound represented by Chemical Formula 1 include compounds represented by one of the following structural formulas, but the present invention is not limited thereto.

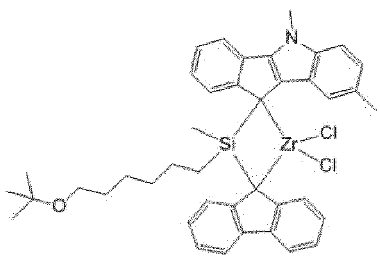
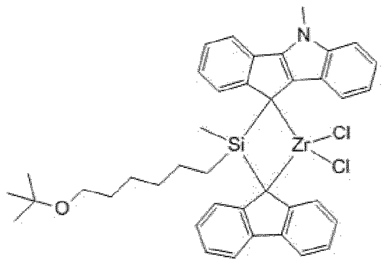

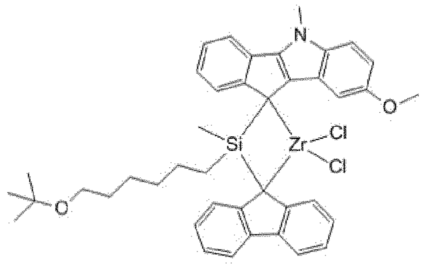

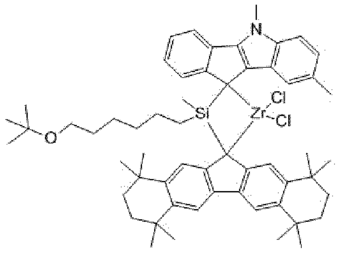

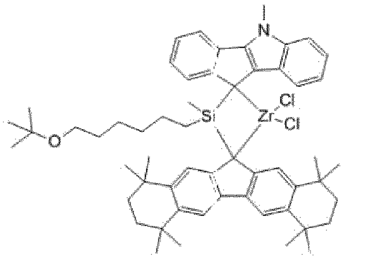

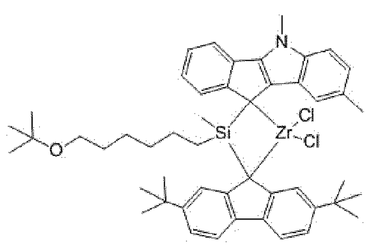

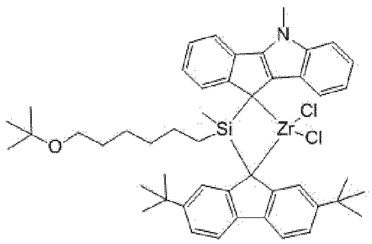

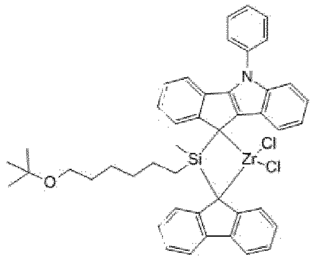

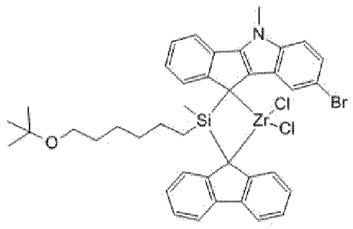

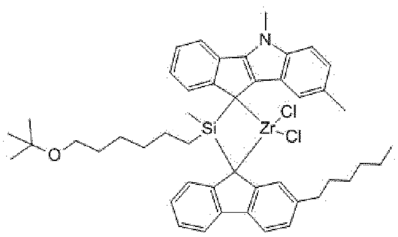

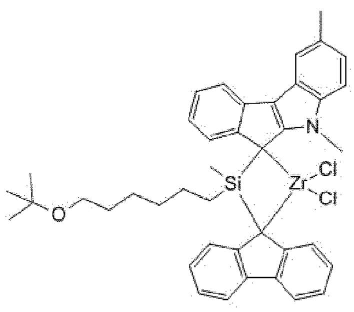

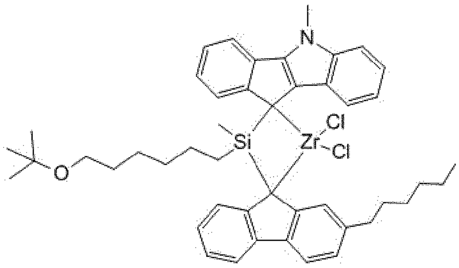

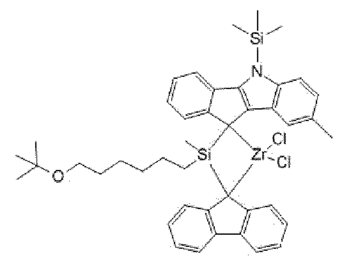

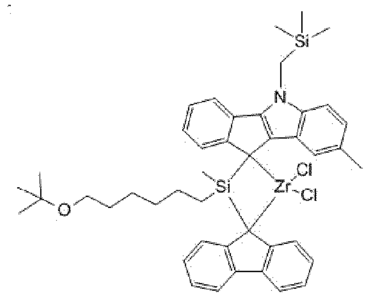

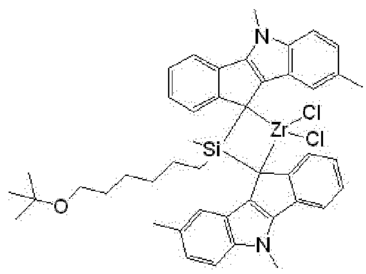

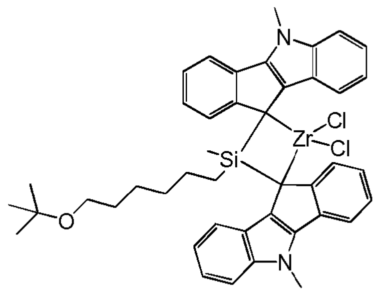

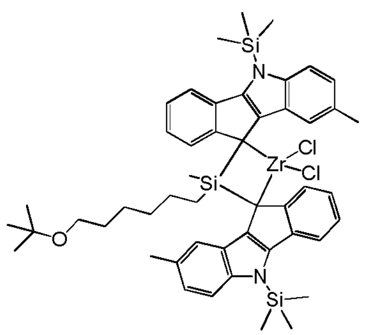

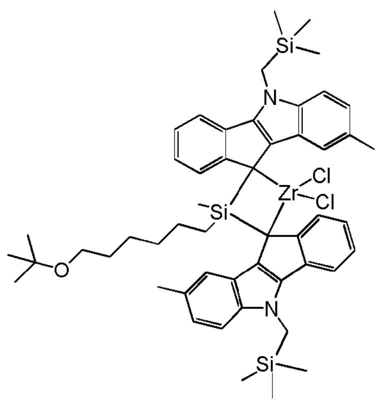

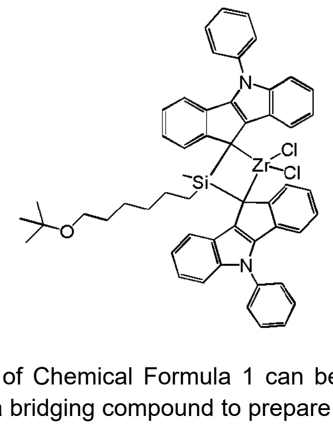

The first metallocene compound of Chemical Formula 1 can be prepared by connecting an indenoindole derivative and/or a fluorene derivative via a bridging compound to prepare a ligand compound, and then introducing a metal precursor compound therein to perform a metalation. The method for preparing the first metallocene compound will be specifically described in Examples described later.

Meanwhile, the second metallocene compound represented by Chemical Formula 3 contributes mainly to the production of a low molecular weight copolymer having a low short chain branch (SCB) content, and when used together with the first metallocene compound, it is a high molecular weight olefinic copolymer having a high SCB content and at the same time has a broad molecular weight distribution, so that an olefin polymer having excellent physical properties as well as excellent processability can be produced.

Specific examples of the second metallocene compound represented by Chemical Formula 3 include compounds represented by the following structural formulas, but the present invention is not limited thereto.

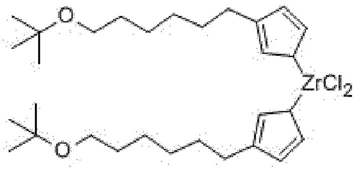 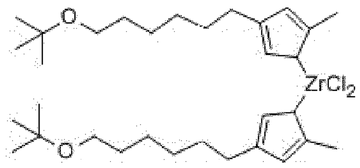 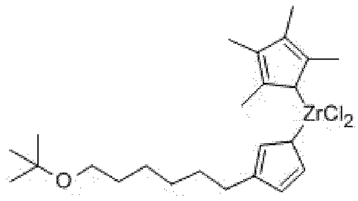

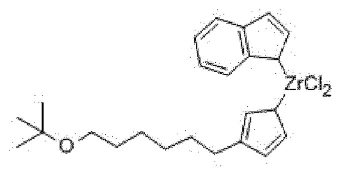 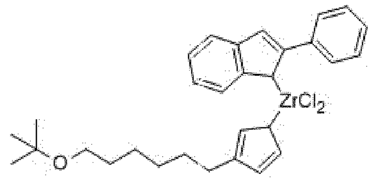 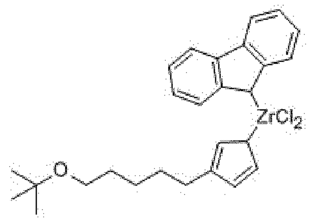

Further, among the above-mentioned second metallocene compounds, as $-(CH_2)_n-OR_a$ (where $R_a$ is $C_{1-6}$ linear or branched alkyl group, and n is an integer from 2 to 10), more specifically t-butoxyhexyl group, is introduced into any one of $R_{21}$ to $R_{24}$ and in any one of $R_{25}$ to $R_{28}$ as a substituent of the cyclopentadienyl group in Chemical Formula 3, low conversion can be exhibited in the production of a polyolefin using a comonomer, so that low molecular weight polyolefin having controlled degree of copolymerization or comonomer distribution can be produced.

Specifically, the second metallocene compound having excellent activity, and capable of further improving a comonomer incorporation, particularly a comonomer incorporation of 1-octene, 1-butene or 1-hexene when used together with the transition metal compound represented by Chemical Formula 1, may include compounds represented by the following structural formulas, and a mixture of any one or both of them may be used.

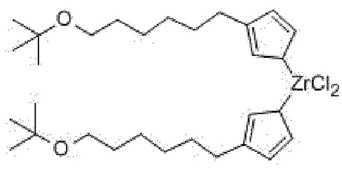 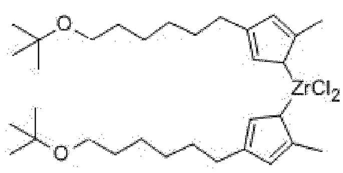

On the other hand, the third metallocene compound of Chemical Formula 4 has a structure in which two indene groups are cross-linked via $SiQ_1Q_2$ bridge, and at least one substituent of $R_{31}$ to $R_{34}$ of the indene group is $-(CH_2)_n-OR_a$, and each of the indene groups may be substituted with $R_b$ and $R_c$.

As described above, as the third metallocene compound has a structure in which at least one tether group, more specifically two or more tether groups, of $-(CH_2)_n-OR_a$ (where $R_a$ is $C_{1-6}$ linear or branched alkyl group, and n is an integer of 2 to 10) is introduced into indene or its derivative, lower comonomer conversion can be exhibited in the production of a polyolefin using a comonomer, as compared with other Cp-based catalysts which do not contain such a substituent, so that medium or low molecular weight polyolefin having controlled degree of copolymerization or comonomer distribution can be produced.

More specifically, when the first metallocene compound of Chemical Formula 1 for the preparation of a polyolefin in a high molecular weight region and the third metallocene compound of Chemical Formula 4 are used together as a hybrid catalyst, a polyolefin in a high molecular weight region can exhibit high comonomer incorporation due to the first metallocene compound, and a polyolefin in a low molecular weight region can exhibit low comonomer incorporation due to the action of the metallocene compounds of Chemical Formula 4. Accordingly, it is very advantageous to polymerize a polyolefin having a structure in which the comonomer content is concentrated in a high molecular weight main chain, that is, a BOCD (Broad Orthogonal Co-monomer Distribution) structure in which the content of the chain side chain increases toward the higher molecular weight side.

Specifically, at least one of $R_{31}$ to $R_{34}$ in Chemical Formula 4 is $-(CH_2)_n-OR_a$ (where $R_a$ is $C_{1-6}$ linear or branched alkyl group and n is an integer of 2 to 10). In Chemical Formula 1, $-(CH_2)_n-OR_a$ may be specifically a tert-butoxybutyl group or a tert-butoxyhexyl group. More specifically, the two indene groups may each contain $-(CH_2)_n-OR_a$ group, and the $-(CH_2)_n-OR_a$ group may be a tert-butoxybutyl group or a tert-butoxyhexyl group. When the transition metal compound having such a structure is supported on a support, the $-(CH_2)_n-OR_a$ group can form a covalent bond through close interaction with a silanol group on the surface of the silica used as the support. Further, the functional group may affect the comonomer incorporation of alpha olefin comonomers such as 1-octene, 1-butene, or 1-hexene. In the case of having a short alkyl chain where n in $-(CH_2)_n-OR_a$ is 10 or less, more specifically 6 or less, still more specifically 4 or less, the comonomer

incorporation to an alpha olefin comonomer is lowered while maintaining the total polymerization activity. Therefore, it is advantageous for the production of a polyolefin whose copolymerization degree is controlled without lowering other physical properties.

The third metallocene compound represented by Chemical Formula 4 may be, for example, a compound represented by one of the following structural formulas, but is not limited thereto.

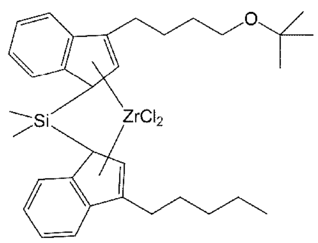

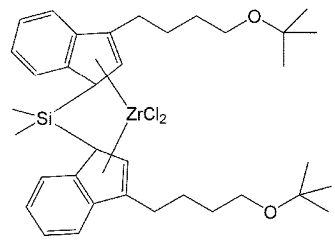

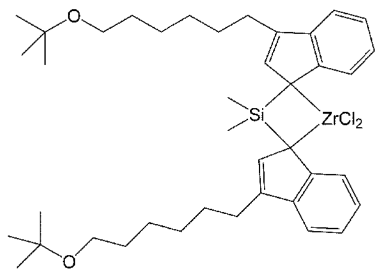

The third metallocene compound represented by Chemical Formula 4 may be prepared according to a known method for preparing an organic compound or a transition metal compound, and will be described in more detail in Examples described later.

The catalyst composition used in the present invention may be that obtained by supporting one or more types of first metallocene compounds represented by Chemical Formula 1, one or more types of second metallocene compounds represented by Chemical Formula 3; and one or more types of third metallocene compounds represented by Chemical Formula 4 together with a cocatalyst compound on the support.

In the supported metallocene catalyst according to the present invention, a support containing a hydroxy group on its surface can be used as the support, and preferably a support having highly reactive hydroxy group and siloxane group, of which the surface is dried and removed of moisture can be used.

For example, silica, silica-alumina, silica-magnesia or the like, which are dried at high temperature, can be used, and they may typically contain oxides, carbonates, sulfates, and nitrates such as $Na_2O$, $K_2CO_3$, $BaSO_4$, and $Mg(NO_3)_2$.

The drying temperature of the support is preferably 200 to 800°C, more preferably 300 to 600°C, and most preferably 300 to 400°C. If the drying temperature of the support is lower than 200°C, it retains moisture too much so that moisture on the surface is reacted with the cocatalyst. If the drying temperature is higher than 800°C, pores on the surface of the support are combined with each other to reduce surface area, and many hydroxyl groups are lost on the surface to remain only siloxane groups. Thus, since the reactive sites with cocatalyst are reduced, it is not preferable.

The amount of hydroxyl group on the surface of the support is preferably 0.1 to 10 mmol/g, and more preferably 0.5 to 5 mmol/g. The amount of hydroxyl group on the surface of the support may be controlled depending on the preparation method and conditions of the support, or drying conditions such as temperature, time, vacuum, spray drying, and the like. If the amount of hydroxyl group is less than 0.1 mmol/g, the reactive sites with cocatalyst are reduced. If the amount of hydroxyl group is more than 10 mmol/g, it is not desirable because it may be caused by moisture besides the hydroxyl groups present on the surface of support particles.

The supported metallocene catalyst can induce the production of LCB (Long Chain Branch) in the olefin polymer to be produced, specifically ethylene/1-hexene or ethylene/1-butene copolymer.

Further, in the supported metallocene catalyst according to the present invention, the cocatalyst to be supported on the support for activation of the metallocene compound may be an organometallic compound containing a Group 13 metal, and is not particularly limited as long as it can be used for polymerizing an olefin in the presence of a general metallocene catalyst.

Specifically, the cocatalyst compound may include at least one of an aluminum-containing primary cocatalyst of the following Chemical Formula 5 and a borate-containing secondary cocatalyst of the following Chemical Formula 6.

[Chemical Formula 5] $-[Al(R_{31})-O-]_k-$

in Chemical Formula 5, each $R_{31}$ is independently halogen, a halogen-substituted or unsubstituted hydrocarbyl group having 1 to 20 carbon atoms, and k is an integer of 2 or more,

[Chemical Formula 6] $T^+[BG_4]^-$

in Chemical Formula 6, $T^+$ is a +1 valent polyatomic ion, B is boron in an oxidation state of +3, and G is each independently selected from the group consisting of hydride, dialkylamido, halide, alkoxide, aryloxide, hydrocarbyl, halocarbyl and halo-substituted hydrocarbyl, wherein the G has 20 or less carbon atoms, provided that G is halide at one or less position.

By using the first and second cocatalysts, the polydispersity index of the finally produced polyolefin becomes more uniform, and thus the polymerization activity can be improved.

The first cocatalyst of Chemical Formula 5 may be an alkylaluminoxane-based compound wherein the repeating units are combined into a linear, circular or network form. Specific examples of the first cocatalyst include methylaluminoxane (MAO), ethylaluminoxane, isobutylaluminoxane, butylaluminoxane, and the like.

Further, the second cocatalyst of Chemical Formula 6 may be a trisubstituted ammonium salt, or a dialkylammonium salt, or a trisubstituted phosphate type borate compound. Specific examples of the second cocatalyst include a borate-based compound in the form of a trisubstituted ammonium salt, such as trimethylammonium tetraphenylborate, methyl dioctadecylammonium tetraphenylborate, triethylammonium tetraphenylborate, tripropylammonium tetraphenylborate, tri(n-butyl)ammonium tetraphenylborate, methyltetradecyloctadecylammonium tetraphenylborate, N,N-dimethylanilinium tetraphenylborate, N,N-diethylanilinium tetraphenylborate, N,N-dimethyl(2,4,6-trimethylanilinium)tetraphenylborate, trimethylammonium tetrakis(pentafluorophenyl)borate, methylditetradecylammonium tetrakis(pentaphenyl)borate, methyldioctadecylammonium tetrakis(pentafluorophenyl)borate, triethylammonium, tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N-dimethyl(2,4,6-trimethylanilinium)tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl (t-butyl) ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate or N,N-dimethyl-(2,4,6-trimethylanilinium) tetrakis-(2,3,4,6-tetrafluorophenyl)borate and the like; a borate-based compound in the form of a dialkylammonium salt, such as dioctadecylammonium tetrakis(pentafluorophenyl)borate, ditetradecylammonium tetrakis(pentafluorophenyl) borate or dicyclohexylammonium tetrakis(pentafluorophenyl)borate; or a borate-based compound in the form of a trisubstituted phosphonium salt, such as triphenylphosphonium tetrakis(pentafluorophenyl)borate, methyldioctadecylphosphonium tetrakis(pentafluorophenyl)borate or tri(2, 6-dimethylphenyl)phosphonium tetrakis(pentafluorophenyl)borate.

The supported metallocene catalyst can be produced, for example, by a method comprising the steps of: supporting a cocatalyst on a support, and sequentially supporting the first metallocene compound and the second metallocene compound on the support. The order of supporting the above metallocene compounds is not particularly limited, but the second metallocene compound, the third metallocene compound and the first metallocene compound having a small molecular structure can be supported in this order.

Further, in the step of supporting a cocatalyst on a support, the supported catalyst can be produced by the steps of adding the cocatalyst to the support dried at a high temperature and stirring the resultant at a temperature of about 20 to 120°C.

Further, in the step of supporting the catalyst precursor on the cocatalyst-supported support, a supported catalyst can be prepared by adding a transition metal compound to the cocatalyst-supported support obtained in the step of supporting the cocatalyst on the support, and then stirring the resultant at a temperature of about 20 to 120°C.

In the step of supporting a transition precursor on the cocatalyst-supported support, a supported catalyst can be prepared by adding a transition metal compound to the cocatalyst-supported support, stirring the resultant and then further adding a cocatalyst thereto.

The content of the support, cocatalyst, the cocatalyst-supported support and the transition metal compound used in the catalyst composition according to one embodiment of the present invention can be appropriately controlled according to the desired physical properties and effects of the supported catalyst.

Specifically, in the catalyst composition according to one embodiment of the present invention, the second and third metallocene compounds may be each independently contained in an amount of 50 to 200 parts by weight based on 100 parts by weight of the first metallocene compound, More specifically, the second metallocene compound can be contained in an amount of 100 to 170 parts by weight, and the third metallocene compound can be contained in an amount of 100 to 170 parts by weight. By incorporating the first to third metallocene compounds in the mixing weight ratio described above, it may be easier to produce olefin polymers having excellent processability and dimensional stability.

Further, in the catalyst composition according to one embodiment of the present invention, a weight ratio of the total transition metal compounds including the first to third transition metal compounds to the support may be 1:10 to 1:1,000, more specifically 1:10 to 1:500. When the support and the metallocene compound are contained within the above weight ratio, an optimal shape may be obtained.

Further, when the catalyst composition further includes a cocatalyst, a weight ratio of the cocatalyst to the support may be 1:1 to 1:100, more specifically 1:1 to 1:50. When including the cocatalyst and the support at the above weight ratio, the activity and microstructure of the polymer may be optimized.

As a reaction solvent used in the preparation of the catalyst composition, a hydrocarbon solvent such as pentane, hexane, heptane, etc., or an aromatic solvent such as benzene, toluene, etc. may be used.

For detailed preparation method of the supported catalyst, reference can be made to examples described later. However, the method for preparing the supported catalyst is not limited to the contents described in the present specification, and the preparation method can further adopt the steps commonly employed in the technical field to which the present invention belongs. The step (s) of the preparation method described above can be typically modified by a changeable step(s).

Meanwhile, the olefin polymer according to another embodiment of the present invention can be produced by polymerizing an olefin monomer in the presence of the above-mentioned metallocene catalyst.

Examples of the olefin monomer that can be polymerized includes ethylene, alpha-olefin, cyclic olefin, or the like, and diene olefinic monomers or triene olefinic monomers having two or more double bonds can also be polymerized. Specific examples of the monomers may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alphamethylstyrene, divinylbenzene, 3-chloromethylstyrene, etc., and these monomers may be copolymerized by mixing two or more thereof. When the olefin polymer is a copolymer of ethylene and another comonomer, the comonomer may be at least one comonomer selected from the group consisting of propylene, 1-butene, 1-hexene, 4-methyl-1-pentene and 1-octene. More specifically, it may be 1-butene or 1-hexene.

For the polymerization reaction of the above olefin monomer, various polymerization processes that are known as a polymerization reaction of olefin monomer such as a continuous solution polymerization process, a bulk polymerization process, a suspension polymerization process, a slurry polymerization process, or an emulsion polymerization process can be employed.

Further, the polymerization temperature may be about 25 to about 500°C, preferably about 25 to about 200°C, more preferably about 50 to about 150°C. Also, the polymerization pressure may be about 1 to about 100 $Kgf/cm^2$, preferably about 1 to about 50 $Kgf/cm^2$, more preferably about 5 to about 30 $Kgf/cm^2$.

The polymerization reaction can also be carried out under hydrogen gas.

At this time, the hydrogen gas serves to activate the inactive site of the metallocene catalyst and cause a chain transfer reaction to control the molecular weight. Since the first to third metallocene compounds in the present invention are excellent in hydrogen reactivity, the olefin polymer having a desired level of molecular weight and melt index can be effectively produced by controlling the amount of hydrogen gas used in the polymerization step. Specifically, the hydrogen gas during the polymerization reaction can be injected at a rate of 0.01 to 5 g/hr, more specifically 0.1 to 3.3 g/hr under 1 atm of the reactor.

Further, the above-mentioned metallocene catalyst can be injected in a state of being dissolved or diluted in aliphatic hydrocarbon solvents having 5 to 12 carbon atoms such as pentane, hexane, heptane, nonane, decane, and isomers thereof, aromatic hydrocarbon solvents such as toluene and benzene, or a hydrocarbon solvent substituted with a chlorine atom such as dichloromethane, chlorobenzene, or the like. The solvent used here is preferably used by removing a small amount of water or air which acts as a catalyst poison by treating with a small amount of alkyl aluminum, and it can also be carried out by further using a cocatalyst.

The olefin polymer produced by the above-described preparation method can exhibit excellent processability and dimensional stability satisfying the 2L bloma swell characteristic described above, due to the interaction between a first metallocene compound represented by Chemical Formula 1 which mainly polymerizes a high molecular weight polymer chain, a second metallocene compound represented by Chemical Formula 3 which mainly polymerizes a low molecular weight polymer chain, and the third metallocene compound represented by Chemical Formula 4 which mainly polymerizes a medium or low molecular weight polymer chain. Accordingly, the olefin polymer according to the present invention can be preferably applied to a high-pressure heating pipe, a mining pipe, a large diameter pipe or the like.

Further, the present disclosure describes a method for predicting a Bloma swell characteristic showing physical properties of a polymer, specifically, dimensional stability and processability.

Specifically, the method for predicting the physical properties of the polymer, which is not encompassed by the wording of the claims, comprises the steps of: measuring a capillary swell value using a capillary rheometer and a Mz+1 value using a gel permeation chromatography (GPC) at a temperature of 160°C with respect to a polymer to be measured, respectively; and predicting Bloma swell characteristics from the 2L Bloma swell value determined according to the

following Equation 1 using the measured capillary swell value and Mz+1 value.

[Equation 1]

$$2L\ Bloma\ swell = (Capillary\ swell) \times c1 + (M_{z+1}) \times c2 + c3$$

In the above equation 1, c1=1.27, c2=2.40E$^{-7}$, and c3=-0.940.
The method of predicting the physical properties of the polymer according to the present disclosure is useful for predicting the dimensional stability and processability of the polymer in consideration of the swell characteristic and the stretching characteristic affecting the dimension during processing. For example, the Bloma swell characteristic exhibiting processability and dimensional stability for an olefin polymer produced by the above catalysts and having a polydispersity index (PDI) of 2.5 to 30, more specifically of 2.5 to 25, can be evaluated with high reliability. When the 2L Bloma swell determined according to Equation 1 is in the range of 1.2 to 2.2, it can be expected that excellent dimensional stability and processability are exhibited.

Hereinafter, the actions and effects of the invention will be described in more detail by way of concrete examples below. However, these examples are presented for illustrative purposes only and the scope of the invention is not limited thereto in any way.

**Synthesis Example 1: First metallocene compound**

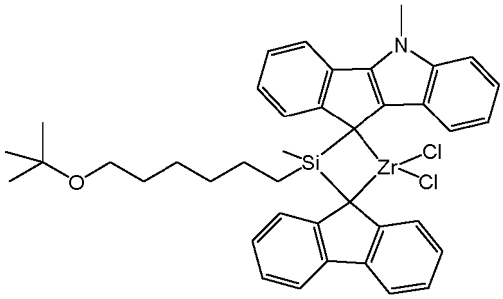

1-1) Preparation of ligand compound

2 g of fluorene was dissolved in 5 mL of MTBE and 100 mL of hexane, and 5.5 mL of 2.5 M n-BuLi hexane solution was added dropwise in a dry ice/acetone bath and stirred at room temperature overnight. 3.6 g of 6- (tert-butoxy) hexyldichloro(methyl) silane was dissolved in 50 mL of hexane, and fluorene-Li slurry was transferred thereto under a dry ice/acetone bath for 30 minutes and the solution was stirred at room temperature overnight. At the same time, 5,8-dimethyl-5,10-dihydroindeno[1,2-b]indole (12 mmol, 2.8 g) was dissolved in 60 mL of THF, and 5.5 mL of 2.5 M n-BuLi hexane solution was added dropwise in a dry ice/acetone bath, and the solution was stirred at room temperature overnight. After the reaction, the solution was extracted with ether/water and residual moisture of the organic layer was removed with $MgSO_4$, thereby obtaining two ligands (Mw 597.90, 12 mmol). It was confirmed by 1H-NMR that two isomers were produced.
$^1$H NMR (500 MHz, d6-benzene): -0.30 ~ -0.18 (3H, d), 0.40 (2H, m), 0.65 ~ 1.45 (8H, m), 1.12 (9H, d), 2.36 ~ 2.40 (3H, d), 3.17 (2H, m), 3.41 ~ 3.43 (3H, d), 4.17 ~ 4.21 (1H, d), 4.34 ~ 4.38 (1H, d), 6.90 ~ 7.80 (15H, m)

1-2) Preparation of metallocene compound

7.2 g (12 mmol) of the ligand compound synthesized in 1-1 above was dissolved in 50 mL of diethylether, and 11.5 mL of 2.5 M n-BuLi hexane solution was added dropwise thereto in a dry ice/acetone bath and stirred at room temperature overnight. The solution was dried under vacuum to obtain a brown-colored sticky oil, which was then dissolved in toluene to obtain a slurry. $ZrCl_4(THF)_2$ was prepared and 50 mL of toluene was added thereto to prepare a slurry. A 50 mL toluene slurry of $ZrCl_4(THF)_2$ was transferred in a dry ice/acetone bath. After stirring at room temperature overnight, it was changed to violet color. The reaction solution was filtered to remove LiCl. The filtrate was dried under vacuum to remove toluene, to which hexane was added and subjected to sonication for 1 hour. The slurry was filtered to obtain 6 g of a dark violet-colored metallocene compound as a filtered solid (Mw 758.02, 7.92 mmol, yield 66 mol%). Two isomers were observed by 1H-NMR.

$^1H$ NMR (500 MHz, $CDCl_3$): 1.19 (9H, d), 1.71 (3H, d), 1.50 ~ 1.70(4H, m), 1.79(2H, m), 1.98 ~ 2.19(4H, m), 2.58(3H, s), 3.38 (2H, m), 3.91 (3H, d), 6.66 ~ 7.88 (15H, m)

**Synthesis Example 2: Preparation of second metallocene compound [tBu-O-$(CH_2)_6$-$C_5H_4]_2ZrCl_2$]**

t-Butyl-O-$(CH_2)_6$-Cl was prepared using 6-chlorohexanol by a method described in Tetrahedron Lett. 2951 (1988), and NaCp was reacted therewith to obtain t-Butyl-O-$(CH_2)_6$-$C_5H_5$ (yield 60%, b.p. 80°C/0.1 mmHg).

Further, t-Butyl-O- $(CH_2)_6$-$C_5H_5$ was dissolved in THF at -78°C, and normal butyllithium (n-BuLi) was slowly added thereto. The temperature was raised to room temperature, and the solution was reacted for 8 hours. The previously synthesized lithium salt solution was slowly added to a suspension of $ZrCl_4(THF)_2$(1.70g, 4.50mmol)/THF(30ml) at -78°C and then further reacted at room temperature for 6 hours.

All volatile materials were dried under vacuum, and hexane solvent was added to the obtained oily liquid material and filtered. The filtered solution was dried under vacuum, and then hexane was added thereto to induce precipitation at a low temperature (-20°C). The obtained precipitate was filtered off at a low temperature to obtain a compound [tBu-O-$(CH_2)_6$-$C_5H_4]_2ZrCl_2$ in the form of a white solid (yield: 92%).

$^1H$ NMR (300 MHz, $CDCl_3$): 6.28 (t, J = 2.6 Hz, 2H), 6.19 (t, J = 2.6 Hz, 2H), 3.31 (t, 6.6 Hz, 2H), 2.62 (t, J = 8 Hz), 1.7 - 1.3 (m, 8H), 1.17 (s, 9H)
$^{13}C$ NMR ($CDCl_3$): 135.09, 116.66, 112.28, 72.42, 61.52, 30.66, 30.61, 30.14, 29.18, 27.58, 26.00

**Synthesis Example 3: Preparation of (tBu-O-$(CH_2)_6$)($CH_3$)Si($C_5(CH_3)_4$)(tBu-N)$TiCl_2$**

50 g of Mg(s) was added to a 10 L reactor at room temperature, and then 300 mL of THF was added thereto. About 0.5 g of $I_2$ was added, and the reactor temperature was maintained at 50°C. After the reactor temperature was stabilized, 250 g of 6-t-butoxyhexyl chloride was added to the reactor using a feeding pump at a rate of 5 mL/min. By adding 6-t-butoxyhexyl chloride, about 4 to 5°C increase in the reactor temperature was observed. The mixture was stirred for 12 hours while continuously adding 6-t-butoxyhexyl chloride. After reaction for 12 hours, a black reaction solution was obtained. 2 mL of the resulting black solution was taken and water was added thereto to obtain an organic layer, and 6-t-butoxyhexane was confirmed through 1H-NMR. A successful Grignard reaction was confirmed from 6-t-butoxyhexane. Consequently, 6-t-butoxyhexyl magnesium chloride was synthesized.

500 g of $MeSiCl_3$ and 1 L of THF were added to a reactor, and then the reactor temperature was cooled to -20°C. 560 g of the synthesized 6-t-butoxyhexyl magnesium chloride was added to the reactor at a rate of 5 mL/min using a feeding pump. After the feeding of the Grignard reagent was completed, the solution was stirred for 12 hours while slowly raising the reactor temperature to room temperature. After reaction for 12 hours, it was confirmed that white $MgCl_2$ salts was produced. 4 L of hexane was added thereto, and salts were removed through labdori to obtain a filter solution. The filter solution thus obtained was added to the reactor, and then hexane was removed at 70°C to obtain a light yellow liquid. It was confirmed by 1H-NMR that the liquid thus obtained was a desired methyl(6-t-butoxy hexyl)dichlorosilane compound.
1H-NMR ($CDCl_3$): 3.3 (t, 2H), 1.5 (m, 3H), 1.3 (m, 5H), 1.2 (s, 9H), 1.1 (m, 2H), 0.7 (s, 3H)

1.2 mol (150 g) of tetramethylcyclopentadiene and 2.4 L of THF were added to the reactor, and then reactor was cooled to -20°C. 480 mL of n-BuLi was added to the reactor at a rate of 5 mL/min using a feeding pump. After n-BuLi was added, the solution was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The solution was stirred for 12 hours while slowly raising the reactor temperature to room temperature. Then, the reactor temperature was cooled to 0°C, and then 2 equivalents of t-$BuNH_2$ were added. The mixture was stirred for 12 hours while slowly raising the reactor temperature to room temperature. After reaction for 12 hours, THF was removed and 4 L of hexane was added thereto, and salts were removed through labdori to obtain a filter solution. The filter solution was added to the reactor, and then hexane was removed at 70°C to obtain a yellow solution. It was confirmed by 1H-NMR that the yellow solution thus obtained was a methyl(6-t-butoxyhexyl) (tetramethylCpH)t-Butylaminosilane) compound.

To the dilithium salt of ligand at -78°C, which was synthesized from n-BuLi and ligand dimethyl(tetramethylCpH)t-butylaminosilane in a THF solution, $TiCl_3(THF)_3$ (10 mmol) was rapidly added. The reaction solution was stirred for 12 hours while slowly raising temperature from -78°C to room temperature. After stirring for 12 hours, an equivalent of $PbCl_2$ (10 mmol) was added to the reaction solution at room temperature, followed by stirring for 12 hours. After stirring for 12 hours, a dark black solution rendering a blue color was obtained. After THF was removed from the produced reaction solution, hexane was added to filter the product. After hexane was removed from the filtered solution, it was confirmed by 1H-NMR that the solution was (tBu-O-$(CH_2)_6$)($CH_3$)Si($C_5(CH_3)_4$)(tBu-N)$TiCl_2$ which is a desired [methyl(6-t-butoxyhexyl) silyl($\eta$5-tetramethylCp)(t-Butylamido)]$TiCl_2$.
1H-NMR ($CDCl_3$): 3.3 (s, 4H), 2.2 (s, 6H), 2.1 (s, 6H), 1.8 ~ 0.8 (m), 1.4 (s, 9H), 1.2(s, 9H), 0.7 (s, 3H)

**Synthesis Example** 4: **Preparation of third metallocene compound**

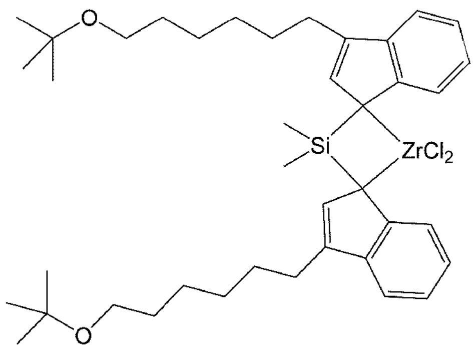

3.4 g (5.7 mmol) of bis(3-(6-(tert-butoxy)hexyl)-1H-inden-1-yl)dimethylsilane ligand was added to a 250 mL schlenk flask dried in an oven and 4 equivalents of MTBE (methyl tert-butyl ether) and toluene solution were dissolved in ether, and then 2.1 equivalents of n-BuLi solution was added and subjected to lithiation until the next day.

2.1 equivalents of $ZrCl_4(THF)_2$ was taken in a glove box and put in a 250 ml schlenk flask and an ether-containing suspension was prepared. The above two flasks were cooled to -78°C and ligand anion was slowly injected into the Zr suspension. After the injection was completed, the temperature of the reaction mixture was slowly increased to room temperature. After stirring overnight, the ether in the mixture was filtered under argon. After filtration, both the filtered solid and the filtrate were evaporated under vacuum-reduced pressure. The remaining catalysts and filter cake were confirmed by NMR whether to synthesize the catalyst, respectively, and the yield and purity were confirmed by weighing and sampling in the glove box.

As a result of the confirmation, 3.6 g (5.58 mmol, 98.02 %) Of the catalyst precursor having the above chemical structure was synthesized from 3.4 g (5.7 mmol) of bis(3-(tert-butoxy)hexyl)-1H-inden-1-yl)dimethylsilane ligand in the filtrate. The synthesized transition metal compound was stored in toluene (2.0723 g/mmol).

NMR standard purity (wt%) = 100%. Mw = 641.05.

1H NMR (500 MHz, CDCl3): 0.87 (6H, m), 1.14 (18H, m), 1.11 - 1.59 (16H, m), 2.61, 2.81 (4H, m), 3.30 (4H, m), 5.54 (1H, s), 5.74 (1H, s), 6.88 (1H, m), 7.02 (1H, m), 7.28 (1H, m), 7.39 (1H, d), 7.47 (1H, t), 7.60 - 7.71 (1H, m).

**Preparation Example 1: Preparation of Catalyst Composition**

6.0 kg of toluene solution was added to a 20 L sus autoclave, and the reactor temperature was maintained at 40°C. 1,000 g of silica (manufactured by Grace Davison, SYLOPOL 948) dehydrated by applying a vacuum for 12 hours at a temperature of 600°C, was added to a reactor to sufficiently disperse the silica. The second metallocene compound of Synthesis Example 2 was then dissolved in toluene and then added thereto. The mixture was allowed to react at 40°C for 2 hours while stirring. Then, stirring was stopped, and the solution was allowed to settle for 30 minutes, and the reaction solution was decanted.

2.5 kg of hexane was added to the reactor and 9.4 kg of 10 wt% methylaluminoxane (MAO)/toluene solution was added thereto, and the solution was stirred at 200 rpm at 40°C for 12 hours. After the reaction, stirring was stopped, and the solution was allowed to settle for 30 minutes and decanted. After 3.0 g of toluene was added and stirred for 10 minutes, the stirring was stopped, and the solution was allowed to settle for 30 minutes, and the toluene solution was decanted.

3.0 kg of toluene was added to the reactor, and 300 ml of 29.2 wt% third metallocene compound/toluene solution was added to the reactor, and then the solution was stirred at 200 rpm at 40°C for 12 hours.

60 g of the first metallocene compound of Synthesis Example 1 and 1,000 mL of toluene were put in a flask to prepare a solution, followed by sonication for 30 minutes. The solution of the metallocene compound of Synthesis Example 1/toluene thus prepared was added to the reactor, followed by stirring at 200 rpm at 40°C for 2 hours. The reactor temperature was decreased to room temperature, and then the stirring was stopped, and the solution was allowed to settle for 30 minutes and the reaction solution was decanted.

2.0 g of toluene was added to the reactor and stirred for 10 minutes. Then, the stirring was stopped, and the solution was allowed to settle for 30 minutes, and the toluene solution was decanted.

3.0 kg of toluene was added to a reactor, and hexane slurry was transported to a filter dryer to filter the hexane solution. The solution was dried under reduced pressure at 40°C for 4 hours to prepare 890 g of a $SiO_2$ catalyst.

## Preparation Example 2: Preparation of Catalyst Composition

3.0 kg of a toluene solution was added to a 20 L sus autoclave, and the reactor temperature was maintained at 40°C. 500 g of silica (Grace Davison, SP2212) were added to the reactor. After silica was sufficiently dispersed, 2.78 kg of a 10 wt% methylaluminoxane(MAO)/toluene solution was added and stirred at 200 rpm at 80°C for 15 hours. After the reactor temperature was decreased to 40°C, 200 g of 7.5 wt% first metallocene compound/toluene solution of Synthesis Example 1 was added to the reactor and stirred at 200 rpm for 1 hour. Then, 250 g of 8.8 wt% second metallocene compound/toluene solution of Synthesis Example 2 was added to the reactor and stirred at 200 rpm for 1 hour.

The third metallocene compound (24 g) of Synthesis Example 4 was dissolved in toluene and added to the reactor, followed by stirring at 200 rpm for 2 hours. 70 g of cocatalyst (anilinium tetrakis (pentafluorophenyl)borate) was diluted in toluene, and added to the reactor followed by stirring at 200 rpm for 15 hours. After the reactor temperature was decreased to room temperature, the stirring was stopped, the solution was allowed to settle for 30 minutes and the reaction solution was decanted.

The toluene slurry was transferred to a filter dryer and filtered. 3.0 kg of toluene was added to the reactor and stirred for 10 minutes. Then, the stirring was stopped and filtration was carried out. 3.0 kg of hexane was added to the reactor and stirred for 10 minutes. Then, the stirring was stopped and filtered. The solution was dried under reduced pressure at 50°C for 4 hours to prepare 500 g of a $SiO_2$ supported catalyst.

## Comparative Preparation Example 1: Preparation of Supported Catalyst

6.0 kg of toluene was added to a 20 L sus autoclave, and the reactor temperature was maintained at 40°C. 1,000 g of silica (SYLOPOL 948, manufactured by Grace Davison) dehydrated by applying a vacuum at a temperature of 600°C for 12 hours was added to the reactor to sufficiently disperse the silica. Then, 80 g of the second metallocene compound of Synthesis Example 2 was dissolved in toluene and added thereto. The solution was reacted with stirring at 40°C for 2 hours. Then, the stirring was stopped, the solution was allowed to settle for 30 minutes, and the reaction solution was decanted.

2.5 kg of toluene was added to the reactor, and 9.4 kg of 10 wt% methylaluminoxane(MAO)/toluene solution was added thereto. The solution was stirred at 200 rpm at 40°C for 12 hours. After the reaction, the stirring was stopped, the solution was allowed to settle for 30 minutes, and reaction solution was decanted. 3.0 kg of toluene was added to the reactor and stirred for 10 minutes. Then, the stirring was stopped, the solution was allowed to settle for 30 minutes, and the toluene solution was decanted.

3.0 kg of toluene was added to the reactor, and 200 mL of 29.2 wt% metallocene compound/toluene solution of Synthesis Example 3 was added to the reactor, followed by stirring at 200 rpm at 40°C for 12 hours.

80 g of the first metallocene compound of Synthesis Example 1 and 1,000 mL of toluene were put in a flask to prepare a solution, which was then subjected to sonication for 30 minutes. The metallocene compound/toluene solution of Preparation Example 1 thus prepared was put into a reactor and reacted with stirring 200 rpm at 40°C for 2 hours. After the reactor temperature was lowered to room temperature, the stirring was stopped, the solution was allowed to settle for 30 minutes, and the reaction solution was decanted.

2.0 kg of toluene was added to the reactor and stirred for 10 minutes, then the stirring was stopped, the solution was allowed to settle for 30 minutes, and the toluene solution was decanted.

3.0 kg of hexane was added to the reactor, the hexane slurry was transferred to a filter dryer, and the hexane solution was filtered. The filtrate was dried at 40°C for 4 hours under reduced pressure to prepare a 700 g of $SiO_2$ catalyst composition.

## Example 1: Ethylene/1-butene copolymer

An olefin polymer was prepared by the unimodal operation of one reactor using a hexane slurry stirred tank process polymerization reactor in the presence of the catalyst composition prepared in Preparation Example 1, and 1-butene was used as the comonomer.

## Examples 2 to 6 and Comparative Examples 1 & 2: Ethylene/1-butene copolymer

An ethylene/1-butene copolymer was produced in the same manner as in Example 1, except that the procedure was carried out under the conditions shown in Table 1 below.

[Table 1]

| | Example 1 | Example 2 | Example 3 | Example 4 | Example 5 | Example 6 | Comparative Example 1 | Comparative Example 2 |
|---|---|---|---|---|---|---|---|---|
| Catalyst composition | Preparation Example 1 | Preparation Example 1 | Preparation Example 2 | Preparation Example 1 | Preparation Example 1 | Preparation Example 1 | Comparative Preparation Example 1 | Comparative Preparation Example 1 |
| Supply amount of ethylene (kg/hr) | 10.0 | 10.0 | 10.0 | 10.0 | 10.0 | 10.0 | 10.0 | 10.0 |
| Addition amount of 1-butene (ml/min) | 15.0 | 17.7 | 11.0 | 14.5 | 13.7 | 12.0 | 12.0 | 5.0 |
| Addition amount of hydroge n (g/hr) | 1.4 | 3.3 | 0.10 | 1.2 | 1.3 | 1.4 | 0.70 | 1.11 |
| Catalyt ic activit y* (kgPE/k g cat./hr ) | 16.6 | 11.2 | 19.8 | 10.0 | 10.7 | 15.1 | 10.0 | 11.0 |

In Table 1 above,

* Catalytic activity (kgPE/g Cat): The catalyst activity was calculated by measuring the weight of the catalyst used in the synthesis reaction of Examples and Comparative Examples and the weight of the polymer derived from the above reaction.

Experimental Example 1

After measuring the Mz+1 and capillary swell for the olefin polymers prepared in Examples 1 to 6 and Comparative Examples 1 and 2, the 2L bloma was predicted and compared with the actual 2L bloma. The results are shown in Table 2 and FIG. 1, respectively.

(1) Measurement of molecular weight: Mz+1 was measured using a gel permeation chromatography (GPC) (manufactured by Agilent). The analysis temperature was set to 160°C, trichlorobenzene was used as a solvent, and molecular weight was determined by standardizing with polystyrene.
(2) Capillary swell: The capillary swell was measured using a capillary rheometer at a temperature of 210°C and a shear rate of 700/s.
(3) 2L Bloma swell value: After measurement using a capillary rheometer, 2 L bloma swell value was calculated according to the following Equation 1:

$$\text{2L Bloma swell} = (\text{Capillary swell}) \times c1 + (M_{z+1}) \times c2 + c3 \quad \text{[Equation 1]}$$

in the above equation 1, c1=1.27, c2=2.40E$^{-7}$, and c3=-0.940.
(4) 2 L bloma value: As shown in Figure 2, when the resin coming out through an extrusion die of an auto-blow molding m/c (Bloma Engineering, model: BM40DE 70) falls by 60 cm in the vertical direction, the resin in the middle portion of 20 to 40 cm was cut with scissors, and its weight was measured and calculated according to the following Equation 2.

$$\text{Die Sell Ratio} = \text{Weight of Cut Resin (g)} / \text{Weight of Reference Resin (g)} \quad \text{[Equation 2]}$$

in Equation 2, the weight of the cut resin is a weight (unit: g) measured by cutting a resin (length: 20 cm) of 20 to 40 cm in the center with scissors when the resin coming out through an extrusion die (outer diameter: 9cm, inner diameter: 8.64cm) falls by 60 cm in the vertical direction, and the weight of the reference resin is the weight (unit: g) corresponding to the resin (length: 20 cm) when the extruded resin has no swell.

[Table 2]

| | Mz+1 [g/mol] | Capillary swell | 2L bloma swell value | 2L bloma value |
|---|---|---|---|---|
| Example 1 | 4,037,000 | 1.61 | 2.07 | 2.03 |
| Example 2 | 3,686,000 | 1.48 | 1.82 | 1.89 |
| Example 3 | 871,000 | 1.91 | 1. 69 | 1.70 |
| Example 4 | 4,027,000 | 1.56 | 2.00 | 2.08 |
| Example 5 | 4,080,000 | 1.50 | 1.94 | 1. 95 |
| Example 6 | 4,259,000 | 1.60 | 2.11 | 2.14 |
| Comparati ve Example 1 | 4,266,000 | 2.32 | 3.03 | 3.05 |
| Comparati ve Example 2 | 2,506,000 | 2.30 | 2.58 | 2.65 |

The 2L bloma swell value of the olefin polymer calculated according to Equation 1 closely coincided with the 2L bloma value indicating the dimensional stability of the polymer. From this, it can be seen that the bloma swell characteristic of the polymer, specifically, the processability and dimensional stability at the time of forming a pipe can be predicted from the 2L bloma swell value calculated according to Equation 1.

Experimental Example 2: Evaluation of Physical Properties of Olefin Polymer

The physical properties of the olefin polymers prepared in Examples 1 to 6 and Comparative Examples 1 and 2 were measured by the following methods, and are shown together with the values of capillary swell, 2L bloma swell value, and 2L bloma values in Table 3 below.

(1) Measurement of molecular weight: 10 mg of sample was pretreated with PL-SP260 in 1,2,4-trichlorobenzene containing 0.0125% BHT at 160°C for 10 hours, and the weight average molecular weight (Mw) the number average molecular weight (Mn) and the Z-average molecular weight (Mz+1) of the olefin polymers were measured using PLGPC 220 at a measurement temperature of 160°C. The polydispersity index (PDI, Mw/Mn) was calculated from this. Molecular weight was determined by standardizing with polystyrene.
(2) $MI_{2.16}$ and MFRR (21.6/2.16): Melt Index ($MI_{2.16}$) was measured according to standard ASTM D1238 (Condition E, 190°C, load of 2.16kg). Melt Flow Rate Ratio (MFRR (21.6/2.16)) was calculated by dividing $MFR_{21.6}$ by $MFR_{2.16}$, $MFR_{21.6}$ was measured at a temperature of 190°C under a load of 21.6kg according to ISO 1133, and $MFR_{2.16}$ was measured at a temperature of 190°C under a load of 2.16 kg according to ISO 1133.
(3) Density (g/$cm^3$): The density of the olefin polymer was measured according to standard ASTM D792.

[Table 3]

| | Examp le 1 | Examp le 2 | Examp le 3 | Examp le 4 | Examp le 5 | Examp le 6 | Compa rativ e Examp le 1 | Compa rativ e Examp le 2 |
|---|---|---|---|---|---|---|---|---|
| Mn [g/mol] | 16,20 0 | 11,30 0 | 42,70 0 | 15,80 0 | 12,90 0 | 23,30 0 | 35,40 0 | 17,80 0 |
| Mw [g/mol] | 337,0 00 | 290,0 00 | 136,0 00 | 356,0 00 | 328,0 00 | 388,0 00 | 251,0 00 | 268,0 00 |
| PDI | 20.83 | 25.53 | 3.20 | 22.61 | 25.36 | 16.65 | 7.10 | 15.08 |
| Mz+1 [g/mol] | 4,037 ,000 | 3,686 ,000 | 871,0 00 | 4,027 ,000 | 4,080 ,000 | 4,259 ,000 | 4,266 ,000 | 2,506 ,000 |
| $MI_{2.16}$ [g/10min] | 0.027 | 0.044 | 0.593 | 0.027 | 0.033 | 0.018 | 0.244 | 0.131 |

(continued)

| | Examp le 1 | Examp le 2 | Examp le 3 | Examp le 4 | Examp le 5 | Examp le 6 | Compa rativ e Examp le 1 | Compa rativ e Examp le 2 |
|---|---|---|---|---|---|---|---|---|
| MFRR (21.6/2.16) | 418 | 425 | 31 | 418 | 432 | 404 | 75 | 68 |
| Density [g/cm$^3$] | 0.941 1 | 0.940 5 | 0.940 0 | 0.941 0 | 0.941 0 | 0.939 3 | 0.941 5 | 0.939 5 |
| Capillary swell value | 1.61 | 1.48 | 1.91 | 1.56 | 1.50 | 1. 60 | 2.32 | 2.30 |
| 2L bloma swell value | 2.07 | 1.82 | 1. 69 | 2.00 | 1.94 | 2.11 | 3.03 | 2.58 |
| 2L bloma value | 2.03 | 1.89 | 1.70 | 2.08 | 1. 95 | 2.14 | 3.05 | 2.65 |

As a result of experiments, it was confirmed that the polymers of Examples 1 to 6 produced using the catalyst composition according to the present invention exhibited excellent processability and dimensional stability even while maintaining excellent mechanical strength properties.

## Claims

1. A method for preparing an olefin polymer having a 2L Bloma swell value of 1.2 to 2.2 which is determined according to the following Equation 1, as described in the description:

[Equation 1]

$$2L\ Bloma\ swell = (Capillary\ swell) \times c1 + (M_{z+1}) \times c2 + c3$$

in the above equation 1, c1=1.27, c2=2.40E$^{-7}$, and c3=-0.940,
the method comprising a step of polymerizing an olefin monomer in the presence of a catalyst composition comprising one or more types of first metallocene compounds represented by the following Chemical Formula 1, one or more types of second metallocene compounds represented by the following Chemical Formula 3; and one or more types of third metallocene compounds represented by the following Chemical Formula 4:

[Chemical Formula 1]

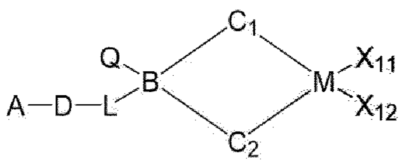

in the above chemical formula 1,
A is hydrogen, halogen, $C_{1-20}$ alkyl, $C_{2-20}$ alkenyl, $C_{3-20}$ cycloalkyl, $C_{6-20}$ aryl, $C_{7-20}$ alkylaryl, $C_{7-20}$ arylalkyl, $C_{1-20}$ alkoxy, $C_{2-20}$ alkoxyalkyl, $C_{3-20}$ heterocycloalkyl, or $C_{5-20}$ heteroaryl;
D is -O-, -S-, -N(R)- or -Si(R)(R')-, wherein R and R' are the same as or different from each other and each independently represent hydrogen, halogen, $C_{1-20}$ alkyl, $C_{2-20}$ alkenyl, $C_{3-20}$ cycloalkyl, or $C_{6-20}$ aryl,
L is $C_{1-10}$ linear or branched alkylene;
B is carbon, silicon or germanium;
Q is hydrogen, halogen, $C_{1-20}$ alkyl, $C_{3-20}$ cycloalkyl, $C_{2-20}$ alkenyl, $C_{6-20}$ aryl, $C_{7-20}$ alkylaryl, or $C_{7-20}$ arylalkyl;
M is a Group 4 transition metal;
$X_{11}$ and $X_{12}$ are the same as or different from each other and each independently represent halogen, $C_{1-20}$ alkyl, $C_{2-20}$ alkenyl, $C_{3-20}$ cycloalkyl, $C_{6-20}$ aryl, nitro, amido, $C_{1-20}$ alkylaryl, $C_{2-20}$ alkoxy, or $C_{1-20}$ sufonate; and
$C_1$ and $C_2$ are the same as or different from each other and are each independently represented by any one

compound represented by the following Chemical Formulas 2a, 2b and 2c, provided that the case where both $C_1$ and $C_2$ are Chemical Formula 2c is excluded:

[Chemical Formula 2a]

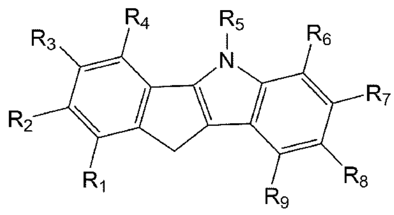

[Chemical Formula 2b]

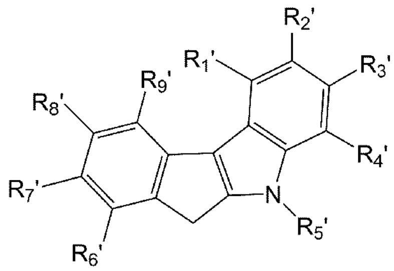

[Chemical Formula 2c]

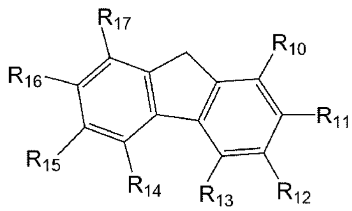

in the above chemical formulas 2a, 2b and 2c, $R_1$ to $R_{17}$ and $R_1$' to $R_9$' are the same as or different from each other and each independently represent hydrogen, halogen, $C_{1-20}$ alkyl, $C_{2-20}$ alkenyl, $C_{3-20}$ cycloalkyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-20}$ alkylaryl, or $C_{7-20}$ arylalkyl, and adjacent two or more substituents of $R_{10}$ to $R_{17}$ may be connected with each other to form a substituted or unsubstituted aliphatic or aromatic ring;

[Chemical Formula 3]

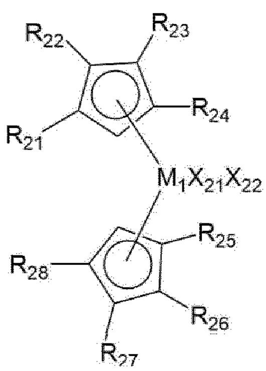

in the above chemical formula 3

$M_1$ is a Group 4 transition metal;

at least one of $R_{21}$ to $R_{28}$ is $-(CH_2)_n-OR_a$, where $R_a$ is $C_{1-6}$ linear or branched alkyl group, and n is an integer of 2 to 10, and the others are the same as or different from each other and each independently represent hydrogen, $C_{1-20}$

alkyl, $C_{2-20}$ alkenyl, $C_{3-20}$ cycloalkyl, $C_{6-20}$ aryl, $C_{7-20}$ alkylaryl, or $C_{7-20}$ arylalkyl, or adjacent two or more substituents thereof may be connected with each other to form a substituted or unsubstituted aliphatic or aromatic ring;

$X_{21}$ and $X_{22}$ are the same as or different from each other and each independently represent halogen, $C_{1-20}$ alkyl, $C_{2-10}$ alkenyl, $C_{3-20}$ cycloalkyl, $C_{7-40}$ alkylaryl, $C_{7-40}$ arylalkyl, $C_{6-20}$ aryl, $C_{1-20}$ alkylidene, amino, $C_{2-20}$ alkylalkoxy, or $C_{7-40}$ arylalkoxy;

[Chemical Formula 4]

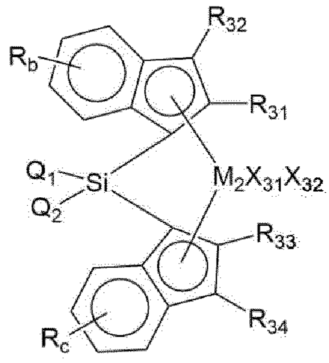

in the above formula 4

$M_2$ is a Group 4 transition metal;

at least one of $R_{31}$ to $R_{34}$ is $-(CH_2)n-ORa$, where $R_a$ is $C_{1-6}$ linear or branched alkyl group, and n is an integer of 2 to 10, and the others are the same as or different from each other and each independently represent hydrogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl, or adjacent two or more substituents thereof may be connected with each other to form a substituted or unsubstituted aliphatic or aromatic ring;

$R_b$ and $R_c$ are the same as or different from each other and each independently represent hydrogen, $C_{1-20}$ alkyl, $C_{3-20}$ cycloalkyl, $C_{1-10}$ alkoxy, $C_{2-20}$ alkoxyalkyl, $C_{6-20}$ aryl, $C_{6-10}$ aryloxy, $C_{2-20}$ alkenyl, $C_{7-40}$ alkylaryl, $C_{7-40}$ arylalkyl, $C_{8-40}$ arylalkenyl, or $C_{2-10}$ alkynyl;

$X_{31}$ and $X_{32}$ are the same as or different from each other and each independently represent halogen, $C_{1-20}$ alkyl, $C_{2-20}$ alkenyl, $C_{3-20}$ cycloalkyl, $C_{7-40}$ alkylaryl, $C_{7-40}$ arylalkyl, $C_{6-20}$ aryl, $C_{1-20}$ alkylidene, amino, $C_{2-20}$ alkylalkoxy, or $C_{7-40}$ arylalkoxy;

$Q_1$ and $Q_2$ are the same as or different from each other and each independently represent hydrogen, halogen, $C_{1-20}$ alkyl, $C_{2-20}$ alkenyl, $C_{3-20}$ cycloalkyl, $C_{6-20}$ aryl, $C_{7-20}$ alkylaryl, or $C_{7-20}$ arylalkyl,

with the proviso that the methods for preparing an olefin polymer as described in Example 1 and Example 2 of EP 3 348 585 A1 are excluded.

**2.** The method for preparing the olefin polymer of claim 1, wherein the catalyst composition comprises each independently the second metallocene compounds and third metallocene compounds in an amount of 50 to 200 parts by weight based on 100 parts by weight of the first metallocene compound.

**3.** The method for preparing the olefin polymer of claim 1, wherein the catalyst composition further includes one or more cocatalysts selected among an aluminum-containing first cocatalyst of the following Chemical Formula 5 and a borate-based cocatalyst of the following Chemical Formula 6:

[Chemical Formula 5] $-[Al(R_{31})-O-]_k-$

in the above chemical formula 5, $R_{31}$ is each independently a halogen, a halogen-substituted or unsubstituted hydrocarbyl group having 1 to 20 carbon atoms, k is an integer of 2 or more,

[Chemical Formula 6] $T^+[BG_4]^-$

in the above chemical formula 6,

$T^+$ is a +1 valent polyatomic ion, B is boron in an oxidation state of +3, and G is each independently selected from the group consisting of hydride, dialkylamido, halide, alkoxide, aryloxide, hydrocarbyl, halocarbyl and halo-substituted hydrocarbyl, wherein the G has 20 or less carbon atoms, provided that G is halide at one or less position.

4. The method for preparing the olefin polymer of claim 1, wherein the catalyst composition further includes a support, and the first, second and third metallocene compounds are supported on the support.

## Patentansprüche

1. Verfahren zur Herstellung eines Olefinpolymers mit einem 2L-Bloma-Quellwert von 1,2 bis 2,2, der gemäß der folgenden Gleichung 1, wie in der Beschreibung beschrieben, bestimmt wird:

[Gleichung 1]

$$\text{2L-Bloma-Quellwert} = (\text{Kapillarquellwert}) \times c1 + (M_{z+1}) \times c2 + c3$$

worin, in der obigen Gleichung 1, ist c1 = 1,27, c2 = 2,40E$^{-7}$ und c3 = -0,940,
wobei das Verfahren einen Schritt des Polymerisierens eines Olefinmonomers in Gegenwart einer Katalysatorzusammensetzung umfasst, welche eine oder mehrere Arten von ersten Metallocenverbindungen mit der folgenden chemischen Formel 1, eine oder mehrere Arten von zweiten Metallocenverbindungen mit der folgenden chemischen Formel 3; und eine oder mehrere Arten von dritten Metallocenverbindungen mit der folgenden chemischen Formel 4 umfasst:

[Chemische Formel 1]

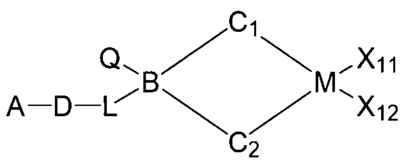

worin, in der obigen chemischen Formel 1
A ist Wasserstoff, Halogen, $C_{1-20}$ Alkyl, $C_{2-20}$ Alkenyl, $C_{3-20}$ Cycloalkyl, $C_{6-20}$ Aryl, $C_{7-20}$ Alkylaryl, $C_{7-20}$ Arylalkyl, $C_{1-20}$ Alkoxy, $C_{2-20}$ Alkoxyalkyl, $C_{3-20}$ Heterocycloalkyl oder $C_{5-20}$ Heteroaryl;
D ist -O-, -S-, -N(R)- oder -Si(R) (R')-, worin R und R' gleich oder verschieden sind und jeweils unabhängig Wasserstoff, Halogen, $C_{1-20}$ Alkyl, $C_{2-20}$ Alkenyl, $C_{3-20}$ Cycloalkyl oder $C_{6-20}$ Aryl bedeuten,
L ist lineares oder verzweigtes $C_{1-10}$ Alkylen;
B ist Kohlenstoff, Silizium oder Germanium;
Q ist Wasserstoff, Halogen, $C_{1-20}$ Alkyl, $C_{3-20}$ Cycloalkyl, $C_{2-20}$ Alkenyl, $C_{6-20}$ Aryl, $C_{7-20}$ Alkylaryl oder $C_{7-20}$ Arylalkyl;
M ist ein Übergangsmetall der Gruppe 4;
$X_{11}$ und $X_{12}$ sind gleich oder verschieden und jeweils unabhängig Halogen, $C_{1-20}$ Alkyl, $C_{2-20}$ Alkenyl, $C_{3-20}$ Cycloalkyl, $C_{6-20}$ aryl, Nitro, Amido, $C_{1-20}$ Alkylaryl, $C_{2-20}$ Alkoxy oder $C_{1-20}$ Sulfonate; und
$C_1$ und $C_2$ sind gleich oder verschieden und jeweils unabhängig eine beliebige Verbindung, die durch die folgenden chemischen Formeln 2a, 2b und 2c dargestellt wird, wobei der Fall, dass sowohl $C_1$ als auch $C_2$ die chemische Formel 2c aufweisen, ausgeschlossen ist:

[Chemische Formel 2a]

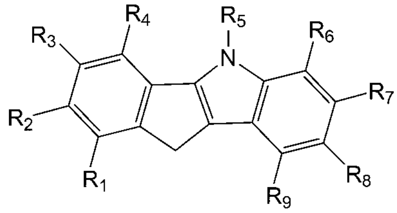

[Chemische Formel 2b]

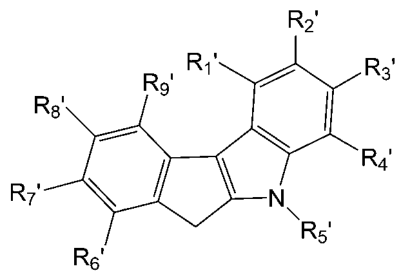

[Chemische Formel 2c]

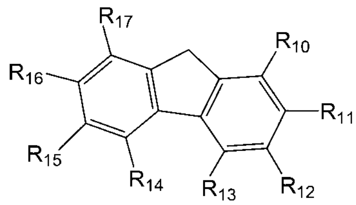

worin, in den obigen chemischen Formeln 2a, 2b und 2c, $R_1$ bis $R_{17}$ und $R_1$' bis $R_9$' sind gleich oder verschieden und jeweils unabhängig Wasserstoff, Halogen, $C_{1-20}$ Alkyl, $C_{2-20}$ Alkenyl, $C_{3-20}$ Cycloalkyl, $C_{1-20}$ Alkylsilyl, $C_{1-20}$ Silylalkyl, $C_{1-20}$ Alkoxysilyl, $C_{1-20}$ Alkoxy, $C_{6-20}$ Aryl, $C_{7-20}$ Alkylaryl oder $C_{7-20}$ Arylalkyl, und zwei oder mehr benachbarte Substituenten von $R_{10}$ bis $R_{17}$ können miteinander verbunden sein, um einen substituierten oder unsubstituierten aliphatischen oder aromatischen Ring zu bilden;

[Chemische Formel 3]

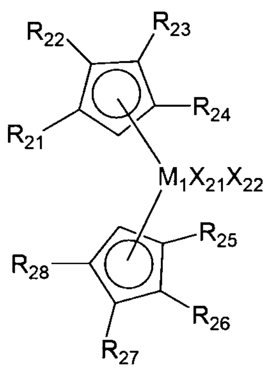

worin, in der obigen chemischen Formel 3,
$M_1$ ist ein Übergangsmetall der Gruppe 4;
mindestens eines von $R_{21}$ bis $R_{28}$ ist -$(CH_2)_n$-$OR_a$, worin $R_a$ eine lineare oder verzweigte $C_{1-6}$ Alkylgruppe ist und n eine ganze Zahl von 2 bis 10 ist, und die anderen sind gleich oder verschieden und jeweils unabhängig Wasserstoff, $C_{1-20}$ Alkyl, $C_{2-20}$ Alkenyl, $C_{3-20}$ Cycloalkyl, $C_{6-20}$ Aryl, $C_{7-20}$ Alkylaryl oder $C_{7-20}$ Arylalkyl, oder zwei oder mehr benachbarte Substituenten davon können miteinander verbunden sein, um einen substituierten oder unsubstituierten aliphatischen oder aromatischen Ring zu bilden;
$X_{21}$ und $X_{22}$ sind gleich oder verschieden und jeweils unabhängig Halogen, $C_{1-20}$ Alkyl, $C_{2-10}$ Alkenyl, $C_{3-20}$ Cycloalkyl, $C_{7-40}$ Alkylaryl, $C_{7-40}$ Arylalkyl, $C_{6-20}$ aryl, $C_{1-20}$ Alkylidene, Amino, $C_{2-20}$ Alkylalkoxy oder $C_{7-40}$ Arylalkoxy;

[Chemische Formel 4]

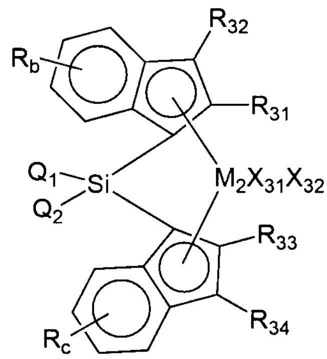

worin, in der obigen Formel 4,
$M_2$ ist ein Übergangsmetall der Gruppe 4;
mindestens eines von $R_{31}$ bis $R_{34}$ ist $-(CH_2)_n-OR_a$, worin $R_a$ eine lineare oder verzweigte $C_{1-6}$ Alkylgruppe ist und n eine ganze Zahl von 2 bis 10 ist, und die anderen sind gleich oder verschieden und jeweils unabhängig Wasserstoff, $C_{1-20}$ Alkyl, $C_{2-20}$ Alkenyl, $C_{3-20}$ Cycloalkyl, $C_{6-20}$ Aryl, $C_{7-20}$ Alkylaryl oder $C_{7-20}$ Arylalkyl, oder zwei oder mehr benachbarte Substituenten können miteinander verbunden sein, um einen substituierten oder unsubstituierten aliphatischen oder aromatischen Ring zu bilden;
$R_b$ und $R_c$ sind gleich oder verschieden und jeweils unabhängig Wasserstoff, $C_{1-20}$ Alkyl, $C_{3-20}$ Cycloalkyl, $C_{1-10}$ Alkoxy, $C_{2-20}$ Alkoxyalkyl, $C_{6-20}$ Aryl, $C_{6-10}$ Aryloxy, $C_{2-20}$ Alkenyl, $C_{7-40}$ Alkylaryl, $C_{7-40}$ Arylalkyl, $C_{8-40}$ Arylalkenyl oder $C_{2-10}$ Alkynyl;
$X_{31}$ und $X_{32}$ sind gleich oder verschieden und jeweils unabhängig Halogen, $C_{1-20}$ Alkyl, $C_{2-20}$ Alkenyl, $C_{3-20}$ Cycloalkyl, $C_{7-40}$ Alkylaryl, $C_{7-40}$ Arylalkyl, $C_{6-20}$ Aryl, $C_{1-20}$ Alkylidene, Amino, $C_{2-20}$ Alkylalkoxy oder $C_{7-40}$ Arylalkoxy;
$Q_1$ und $Q_2$ sind gleich oder verschieden und jeweils unabhängig Wasserstoff, Halogen, $C_{1-20}$ Alkyl, $C_{2-20}$ Alkenyl, $C_{3-20}$ Cycloalkyl, $C_{6-20}$ Aryl, $C_{7-20}$ Alkylaryl oder $C_{7-20}$ Arylalkyl,
mit der Maßgabe, dass die Verfahren zur Herstellung eines Olefinpolymers, wie in Beispiel 1 und Beispiel 2 von EP 3 348 585 A1 beschrieben, ausgeschlossen sind.

2. Verfahren zur Herstellung des Olefinpolymers nach Anspruch 1, bei dem die Katalysatorzusammensetzung jeweils unabhängig die zweiten Metallocenverbindungen und die dritten Metallocenverbindungen in einer Menge von 50 bis 200 Gewichtsteilen, bezogen auf 100 Gewichtsteile der ersten Metallocenverbindung, umfasst.

3. Verfahren zur Herstellung des Olefinpolymers nach Anspruch 1, bei dem die Katalysatorzusammensetzung ferner einen oder mehrere Cokatalysatoren umfasst, die aus einem Aluminium-haltigen ersten Cokatalysator mit der folgenden chemischen Formel 5 und einem Borat-haltigen Cokatalysator mit der folgenden chemischen Formel 6 ausgewählt sind:

[Chemische Formel 5] $-[Al(R_{31})-O-]_k-$

worin, in der obigen chemischen Formel 5, ist $R_{31}$ jeweils unabhängig ein Halogen, eine halogensubstituierte oder unsubstituierte Kohlenwasserstoffgruppe mit 1 bis 20 Kohlenstoffatomen, k ist eine ganze Zahl von 2 oder mehr,

[Chemische Formel 6] $T^+[BG_4]^-$

worin, in der obigen chemischen Formel 6, ist $T^+$ ein +1-wertiges mehratomiges Ion, B ist Bor in einer Oxidationsstufe von +3, und G ist jeweils unabhängig ausgewählt aus der Gruppe bestehend aus Hydrid, Dialkylamido, Halogenid, Alkoxid, Aryloxid, Hydrocarbyl, Halocarbyl und halogensubstituiertem Hydrocarbyl, wobei G 20 oder weniger Kohlenstoffatome aufweist, mit der Maßgabe, dass G an einer oder weniger Positionen Halogenid ist.

4. Verfahren zur Herstellung des Olefinpolymers nach Anspruch 1, bei dem die Katalysatorzusammensetzung ferner einen Träger umfasst und die ersten, zweiten und dritten Metallocenverbindungen auf dem Träger aufgebracht sind.

## Revendications

**1.** Procédé de préparation d'un polymère oléfinique ayant une valeur de gonflement 2L Bloma de 1,2 à 2,2, déterminée selon l'équation 1 suivante :

$$\text{gonflement 2L Bloma} = (\text{gonflement capillaire}) \times c1 + (M_{z+1}) \times c2 + c3 \qquad \text{[Equation 1]}$$

dans l'équation 1 ci-dessus, c1=1.27, c2=2.40E$^{-7}$, et c3=-0.940,
le procédé comprenant une étape de polymérisation d'un monomère oléfinique en présence d'une composition catalytique comprenant un ou plusieurs types de premiers composés métallocènes représentés par la formule chimique 1 suivante, un ou plusieurs types de seconds composés métallocènes représentés par la formule chimique 3 suivante, et un ou plusieurs types de troisièmes composés métallocènes représentés par la formule chimique 4 suivante :

[Formule chimique 1]

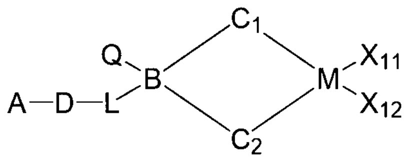

dans la formule chimique 1 ci-dessus,
A est hydrogène, halogène, alkyle en C1-20, alcényle en C2-20, cycloalkyle en C3-20, aryle en C6-20, alkylaryle en C7-20, arylalkyle en C7-20, alcoxy en C1-20, alcoxyalkyle en C2-20, hétérocycloalkyle en C3-20 ou hétéroaryle en C5-20 ;
D est -O-, -S-, -N(R)- ou -Si(R) (R')-, dans lequel R et R' sont identiques ou différents l'un de l'autre et représentent chacun indépendamment hydrogène, halogène, alkyle en C1-20, alcényle en C2-20, cycloalkyle en C3-20 ou aryle en C6-20,
L est un groupe alkylène linéaire ou ramifié en C1-10 ; B est carbone, silicium ou germanium ;
Q est hydrogène, halogène, alkyle en C1-20, cycloalkyle en C3-20, alcényle en C2-20, aryle en C6-20, alkylaryle en C7-20 ou arylalkyle en C7-20 ;
M est un métal de transition du groupe 4 ;
$X_{11}$ et $X_{12}$ sont identiques ou différents l'un de l'autre et représentent chacun indépendammenthalogène, alkyle en C1-20, alcényle en C2-20, cycloalkyle en C3-20, aryle en C6-20, nitro, amido, alkylaryle en C1-20, alcoxy en C2-20 ou sulfone en C1-20 ; et
$C_1$ et $C_2$ sont identiques ou différents l'un de l'autre et sont chacun représentés indépendamment par l'un quelconque des composés représentés par les formules chimiques 2a, 2b et 2c suivantes, à condition que le cas où $C_1$ et $C_2$ sont tous deux représentés par la formule chimique 2c soit exclu :

[Formule chimique 2a]

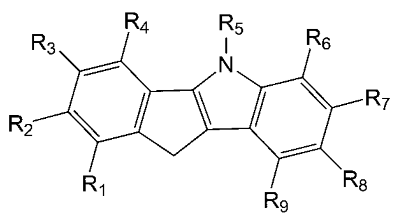

[Formule chimique 2b]

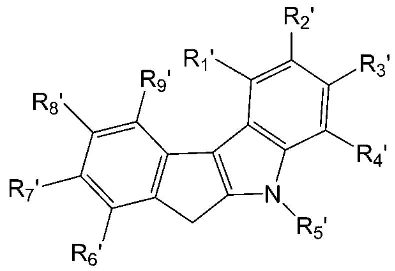

[Formule chimique 2c]

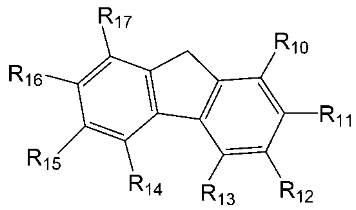

dans les formules chimiques 2a, 2b et 2c ci-dessus, $R_1$ à $R_{17}$ et $R_1$' à $R_9$' sont identiques ou différents les uns des autres et représentent chacun indépendamment hydrogène, halogène, alkyle en C1-20, alcényle en C2-20, cycloalkyle en C3-20, alkylsilyle en C1-20, silylalkyle en C1-20, un groupe alcoxysilyle en C1-20, alcoxy en C1-20, aryle en C6-20, alkylaryle en C7-20 ou arylalkyle en C7-20, et deux ou plusieurs substituants adjacents parmi $R_{10}$ à $R_{17}$ peuvent être liés les uns aux autres pour former un cycle aliphatique ou aromatique substitué ou non substitué ;

[Formule chimique 3]

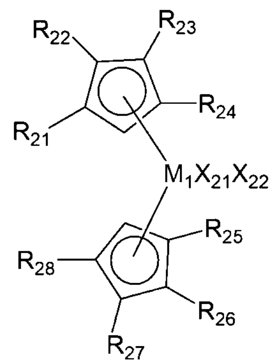

dans la formule chimique 3 ci-dessus $M_1$ est un métal de transition du groupe 4 ;

au moins l'un de $R_{21}$ à $R_{28}$ est $-(CH_2)_n-OR_a$, où $R_a$ est un groupe alkyle linéaire ou ramifié en C1-6, et n est un nombre entier de 2 à 10, et les autres sont identiques ou différents les uns des autres et représentent chacun indépendamment hydrogène, alkyle en C1-20, alcényle en C2-20, cycloalkyle en C3-20, un groupe aryle en C6-20, un groupe alkylaryle en C7-20 ou un groupe arylalkyle en C7-20, ou deux ou plusieurs substituants adjacents peuvent être liés entre eux pour former un cycle aliphatique ou aromatique substitué ou non substitué ;

$X_{21}$ et $X_{22}$ sont identiques ou différents l'un de l'autre et représentent chacun indépendamment halogène, alkyle en C1-20, alcényle en C2-10, cycloalkyle en C3-20, alkylaryle en C7-40, arylalkyle en C7-40, aryle en C6-20, alkylidène en C1-20, amino, alcoxyalkyle en C2-20 ou arylalcoxy en C7-40 ;

[Formule chimique 4]

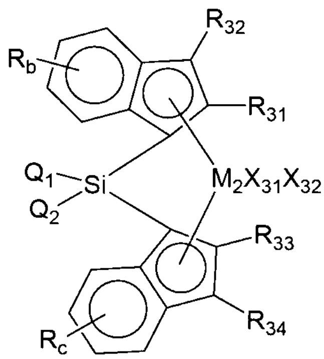

dans la formule chimique 4 ci-dessus
$M_2$ est un métal de transition du groupe 4 ;
au moins l'un de $R_{31}$ à $R_{34}$ est $-(CH_2)_n-OR_a$, où $R_a$ est un groupe alkyle linéaire ou ramifié en C1-6, et n est un nombre entier de 2 à 10, et les autres sont identiques ou différents les uns des autres et représentent chacun indépendamment hydrogène, alkyle en C1-20, alcényle en C2-20, cycloalkyle en C3-20, aryle en C6 à C20, alkylaryle en C7 à C20 ou arylalkyle en C7 à C20, ou deux ou plusieurs substituants adjacents peuvent être liés entre eux pour former un cycle aliphatique ou aromatique substitué ou non substitué ;
$R_b$ et $R_c$ sont identiques ou différents l'un de l'autre et représentent chacun indépendamment hydrogène, alkyle en C1-20, cycloalkyle en C3-20, alcoxy en C1-10, alcoxyalkyle en C2-20, aryle en C6-20, aryloxy en C6-10, alcényle en C2-20, alkylaryle en C7-40, arylalkyle en C7-40, arylalcényle en C8-40 ou alcynyle en C2-10 ;
$X_{31}$ et $X_{32}$ sont identiques ou différents l'un de l'autre et représentent chacun indépendamment halogène, alkyle en C1-20, alcényle en C2-20, cycloalkyle en C3-20, alkylaryle en C7-40, arylalkyle en C7-40, aryle en C6-20, alkylidène en C1-20, amino, alcoxyalkyle en C2-20 ou arylalcoxy en C7-40 ;
$Q_1$ et $Q_2$ sont identiques ou différents l'un de l'autre et représentent chacun indépendamment hydrogène, halogène, alkyle en C1-20, alcényle en C2-20, cycloalkyle en C3-20, aryle en C6-20, alkylaryle en C7-20 ou arylalkyle en C7-20,
à condition que les procédés de préparation d'un polymère oléfinique décrits dans les exemples 1 et 2 du document EP 3 348 585 A1 soient exclus.

2. Le procédé de préparation du polymère oléfinique selon la revendication 1, dans lequel la composition catalytique comprend indépendamment les seconds composés métallocènes et les troisièmes composés métallocènes en une quantité de 50 à 200 parties en poids pour 100 parties en poids du premier composé métallocène.

3. Le procédé de préparation du polymère oléfinique selon la revendication 1, dans lequel la composition catalytique comprend en outre un ou plusieurs cocatalyseurs choisis parmi un premier cocatalyseur contenant de l'aluminium de formule chimique 5 suivante et un cocatalyseur à base de borate de formule chimique 6 suivante :

[Formule chimique 5] $-[Al(R_{31})-O-]_k-$

dans la formule chimique 5 ci-dessus, $R_{31}$ représente indépendamment un halogène, un groupe hydrocarbyle substitué ou non substitué par un halogène ayant 1 à 20 atomes de carbone, k est un nombre entier supérieur ou égal à 2,

[Formule chimique 6] $T^+[BG_4]^-$

dans la formule chimique 6 ci-dessus,
$T^+$ est un ion polyatomique de valence +1, B est le bore à l'état d'oxydation +3, et G est choisi indépendamment dans le groupe constitué par un hydrure, un dialkylamido, un halogénure, un alcoxyde, un aryloxyde, un hydrocarbyle, halogénocarbyle et hydrocarbyle halogéno-substitué, dans lequel le G a 20 atomes de carbone ou moins, à condition que G soit un halogénure à une position ou moins.

4. Le procédé de préparation du polymère oléfinique selon la revendication 1, dans lequel la composition catalytique comprend en outre un support, et les premier, deuxième et troisième composés métallocènes sont supportés sur le

support.

【FIG 1】

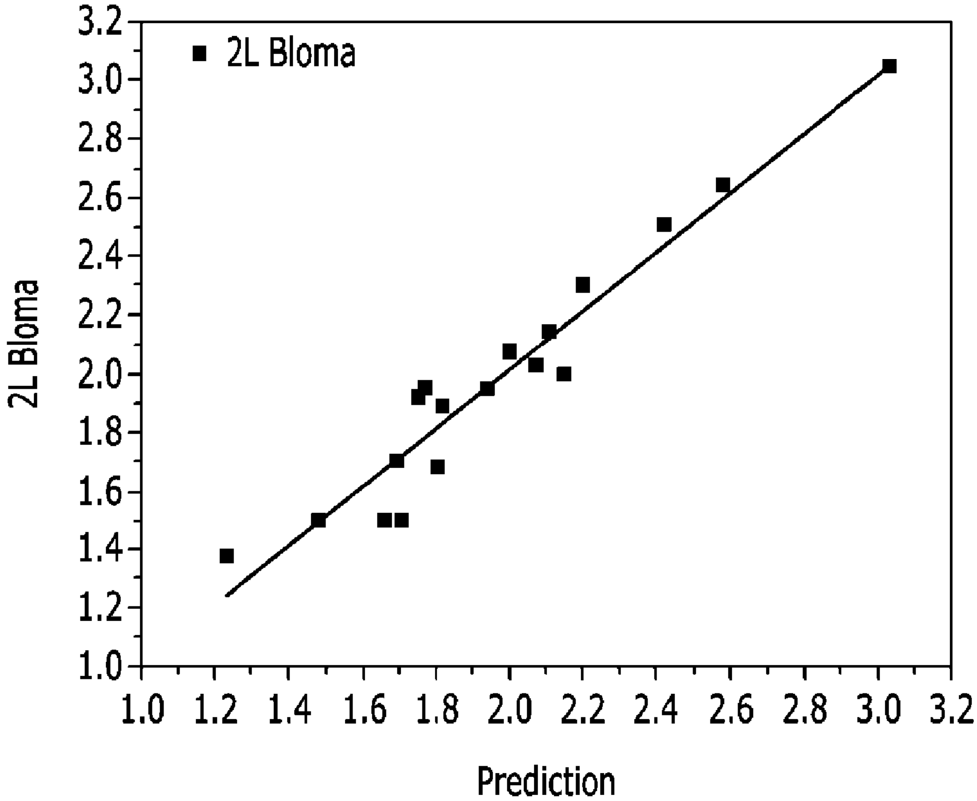
2L Bloma
2L Bloma
Prediction
3.2
3.0
2.8
2.6
2.4
2.2
2.0
1.8
1.6
1.4
1.2
1.0
1.0 1.2 1.4 1.6 1.8 2.0 2.2 2.4 2.6 2.8 3.0 3.2

【FIG 2】

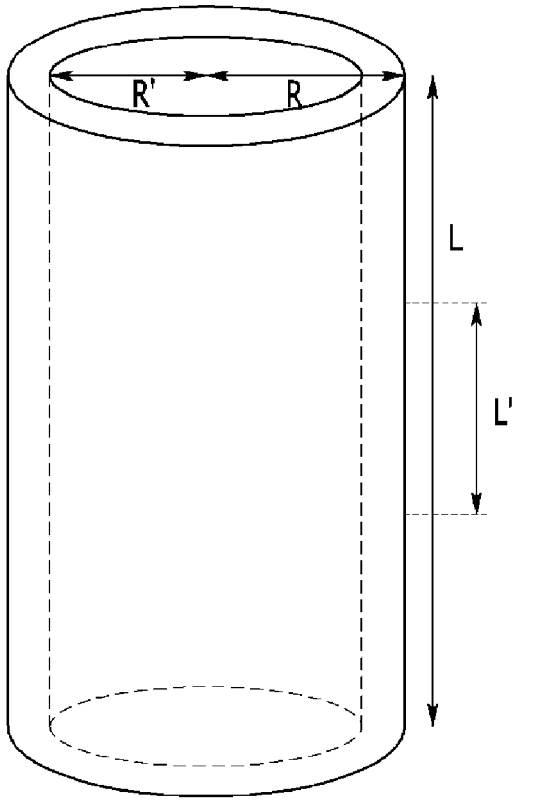

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020170005293
- US 20080312380 A1
- US 20100133714 A1
- KR 20160121045 A
- EP 3348585 A1

### Non-patent literature cited in the description

- *Tetrahedron Lett.*, 1988, 2951